(19) Europäisches Patentamt
European Patent Office
Office européen des brevets

(11) **EP 4 411 705 A1**

(12) **EUROPEAN PATENT APPLICATION**
published in accordance with Art. 153(4) EPC

(43) Date of publication:
**07.08.2024  Bulletin 2024/32**

(21) Application number: **22872400.1**

(22) Date of filing: **11.03.2022**

(51) International Patent Classification (IPC):
**G09G 3/20** (2006.01)      **G09G 3/32** (2016.01)
**G09G 5/00** (2006.01)      **H04N 5/222** (2006.01)

(52) Cooperative Patent Classification (CPC):
**G09G 3/20; G09G 3/32; G09G 5/00; H04N 5/222**

(86) International application number:
**PCT/JP2022/010845**

(87) International publication number:
**WO 2023/047641 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **27.09.2021  JP 2021156597**

(71) Applicant: **Sony Group Corporation
Tokyo 108-0075 (JP)**

(72) Inventor: **SAKURAI Hisao
Tokyo 108-0075 (JP)**

(74) Representative: **2SPL Patentanwälte PartG mbB
Landaubogen 3
81373 München (DE)**

(54)  **INFORMATION PROCESSING SYSTEM AND INFORMATION PROCESSING METHOD**

(57)    The present technology relates to an information processing system and an information processing method capable of preventing occurrence of a black belt in a case where a display is imaged.

A control unit generates a refresh rate command for driving a pixel in such a manner that a light emission cycle of a video wall corresponds to an exposure time of a video camera for imaging the video wall, and outputs the refresh rate command. The present technology can be applied to, for example, a PC, a video wall controller, a video wall, a video camera and the like forming a reimaging system and a reimaging system used in virtual production in which a video displayed on an LED display is reimaged as a background.

*FIG. 6*

130

REFRESH RATE CONTROL UNIT

| ACQUISITION UNIT | CONTROL UNIT | TRANSMISSION CONTROL UNIT |
|---|---|---|
| 131 | 132 | 133 |

EP 4 411 705 A1

**Description**

TECHNICAL FIELD

The present technology relates to an information processing system and an information processing method, and especially relates to an information processing system and an information processing method capable of preventing occurrence of a black belt in a case where a display is imaged.

BACKGROUND ART

A market for direct-view displays such as a light emitting diode (LED) display has been recently growing. For example, virtual production in which a background such as a landscape is displayed on the LED display to be reproduced at a content production site and the background and a subject are imaged (reimaged) by a camera has rapidly grown.

In such virtual production, when reimaging is performed by an image sensor of a rolling shutter system by the camera, a black belt, which is band-shaped luminance unevenness, might occur in a reimaged video due to non-correspondence between an exposure time of the camera and a light emission cycle of the LED display. The black belt is a band-shaped region having lower luminance than other regions, and the color of the black belt is black of various concentrations.

In order to reduce the visibility of the black belt, it has been devised to shorten the light emission cycle of the LED display, that is, to increase the number of times of light emission of the LED in the exposure period (refer to, for example, Patent Document 1).

CITATION LIST

PATENT DOCUMENT

Patent Document 1: WO 2018/164105

SUMMARY OF THE INVENTION

PROBLEMS TO BE SOLVED BY THE INVENTION

However, in the invention disclosed in Patent Document 1, the visibility of the black belt can be reduced, but it is difficult to prevent the occurrence of the black belt itself.

The present technology has been made in view of such circumstances, and an object thereof is to prevent the occurrence of the black belt in a case where the display is imaged.

SOLUTIONS TO PROBLEMS

An information processing system according to one aspect of the present technology is an information processing system including a control unit that generates a control signal for driving a pixel in such a manner that a light emission cycle of a display and an exposure time of an imaging unit for imaging the display correspond to each other, and outputs the control signal.

An information processing method according to one aspect of the present technology is an information processing method including a generation step of generating a control signal for driving a pixel in such a manner that a light emission cycle of a display and an exposure time of an imaging unit for imaging the display correspond to each other, and an output step of outputting the control signal by an information processing system.

In one aspect of the present technology, a control signal for driving a pixel in such a manner that a light emission cycle of a display and an exposure time of an imaging unit for imaging the display correspond to each other is generated, and the control signal is output.

Note that, the information processing system may be an independent device, a module incorporated in another device, and may include a plurality of devices.

The information processing system according to one aspect of the present technology can be implemented by allowing a computer to execute a program.

Furthermore, in order to implement the information processing system according to one aspect of the present technology, the program to be executed by the computer may be provided by being transmitted via a transmission medium or by being recorded on a recording medium.

BRIEF DESCRIPTION OF DRAWINGS

Fig. 1 is a view illustrating an outline of a first embodiment of a reimaging system to which the present technology is applied.
Fig. 2 is a view illustrating a video reimaged by a video camera in Fig. 1.
Fig. 3 is a diagram illustrating a configuration example of the reimaging system in Fig. 1.
Fig. 4 is a block diagram illustrating a configuration example of the video camera in Fig. 3.
Fig. 5 is a block diagram illustrating a configuration example of hardware of a PC in Fig. 3.
Fig. 6 is a block diagram illustrating a functional configuration example of a CPU in Fig. 5.
Fig. 7 is a block diagram illustrating a configuration example of a video wall controller.
Fig. 8 is a block diagram illustrating a detailed configuration example of a display unit.
Fig. 9 is a diagram illustrating a configuration example of an LED array.
Fig. 10 is a diagram illustrating a light emitting operation of the LED array.
Fig. 11 is a diagram illustrating a light emission cycle of the LED array.

Fig. 12 is a diagram illustrating a cause of occurrence of a black belt.

Fig. 13 is a view illustrating an example of a reimaged video in which the black belt occurs.

Fig. 14 is a diagram illustrating control of a refresh rate by a control unit.

Fig. 15 is a flowchart illustrating imaging processing of the video camera in Fig. 4.

Fig. 16 is a flowchart illustrating refresh rate control processing.

Fig. 17 is a flowchart illustrating video signal processing.

Fig. 18 is a flowchart illustrating display control signal generation processing.

Fig. 19 is a flowchart illustrating display processing.

Fig. 20 is a diagram illustrating an example of a reimaging system that reduces visibility of the black belt by a conventional method.

Fig. 21 is a view illustrating an example of a reimaged video in which the black belt occurs.

Fig. 22 is a view illustrating a configuration example of a second embodiment of a reimaging system to which the present technology is applied.

Fig. 23 is a block diagram illustrating a configuration example of the video camera in Fig. 22.

Fig. 24 is a diagram illustrating the setting of the exposure time by the setting unit in Fig. 23.

Fig. 25 is a flowchart illustrating imaging processing of the video camera in Fig. 23.

Fig. 26 is a flowchart illustrating refresh rate transmission processing.

## MODE FOR CARRYING OUT THE INVENTION

Hereinafter, a mode for carrying out the present technology (hereinafter, referred to as an embodiment) is described. Note that, the description will be given in the following order.

1. First Embodiment (Configuration Example of Reimaging System that Controls Refresh Rate)
2. Second Embodiment (Configuration Example of Reimaging System that Controls Exposure Time)

Note that, the same or similar portions are denoted by the same or similar reference signs in the drawings referred to in the following description.

<First Embodiment>

<Outline of Reimaging System>

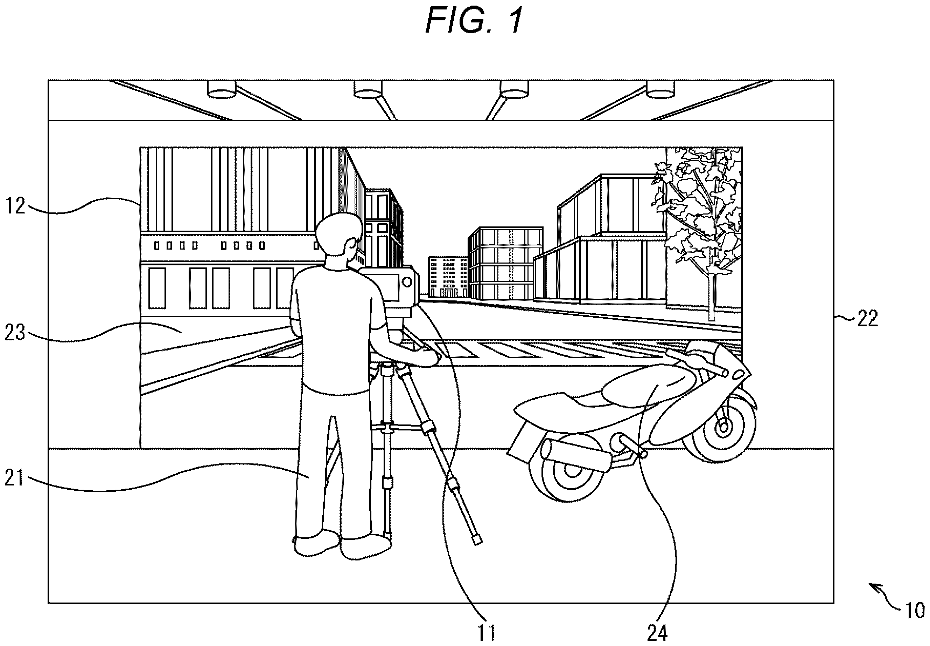

Fig. 1 is a view illustrating an outline of a first embodiment of a reimaging system including an information processing system to which the present technology is applied.

As illustrated in Fig. 1, a reimaging system 10 is, for example, a system used for virtual production, and includes a video camera 11 and a video wall 12. An imager 21 reimages a motorcycle 24, which is a subject, against a video 23 as a background displayed on the video wall 12 installed in a studio 22 using the video camera 11.

<Example of Reimaged Video>

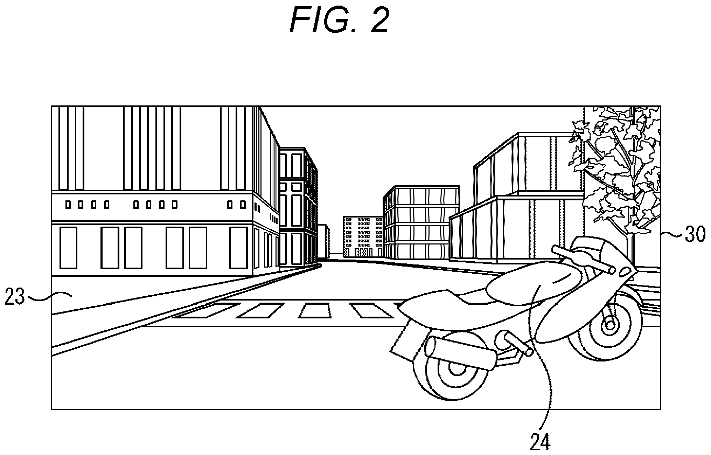

Fig. 2 is a view illustrating a video reimaged by the video camera 11 in Fig. 1.

As illustrated in Fig. 2, a video 30 reimaged by the video camera 11 is a video as if the motorcycle 24 is present in a place where the video 23 was imaged. In this manner, the imager 21 can image the video 30 as if the motorcycle 24 is present in the place where the video 23 was imaged in the studio 22 by performing reimaging using the reimaging system 10.

<Configuration Example of Reimaging System>

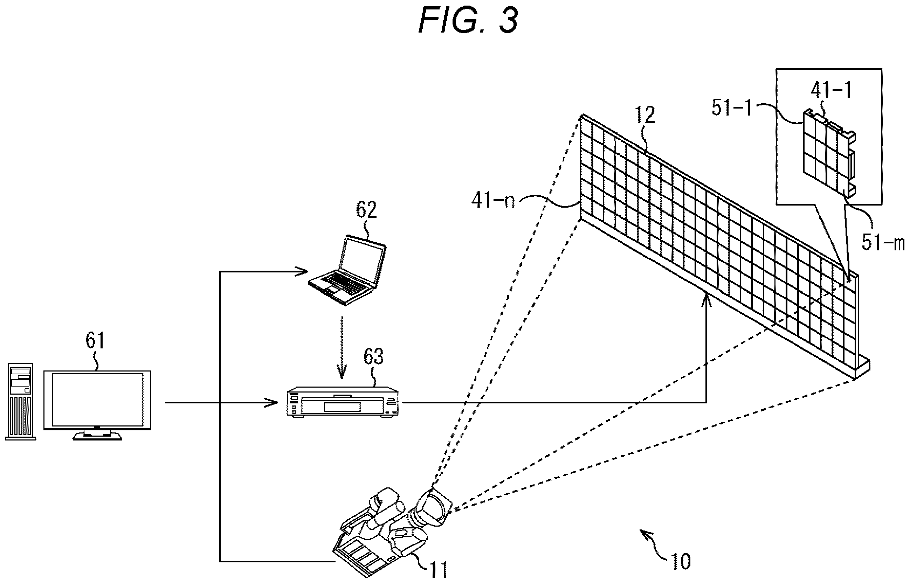

Fig. 3 is a diagram illustrating a configuration example of the reimaging system 10.

As illustrated in Fig. 3, the reimaging system 10 (information processing system) includes a video server 61, a personal computer (PC) 62, and a video wall controller 63 in addition to the video camera 11 and the video wall 12.

The video camera 11 is an imaging device that performs imaging by a rolling shutter system. The video camera 11 receives an input from the imager 21, and sets an exposure time (opening angle) and the like. Furthermore, the video camera 11 images the video displayed on the video wall 12 as the background with the set exposure time in response to an imaging start instruction from the imager 21. Note that, in the reimaging system 10, a plurality of video cameras similar to the video camera 11 may be used.

The video wall 12 (display) is a large-sized LED display in which n (n is a positive integer) display units (cabinets) 41-1 to 41-n are arranged in a tile shape. Fig. 3 illustrates a case where n is $6 \times 24$. Note that, in a case where it is not required to distinguish the display units 41-1 to 41-n from one another, they are hereinafter simply referred to as the display units 41.

The display unit 41 includes m (m is a positive integer) LED arrays 51-1 to 51-m in each of which LEDs (not illustrated) corresponding to respective pixels are arranged in a matrix (two-dimensional array) arranged in a tile shape. Fig. 3 illustrates a case where m is $4 \times 3$. Note that, in a case where it is not required to distinguish the LED arrays 51-1 to 51-m from one another, they are hereinafter simply referred to as the LED arrays 51.

Each display unit 41 of the video wall 12 is connected to the video wall controller 63. The video wall 12 displays, on the basis of a video signal in units of frames and a display control signal that controls the display of the video wall 12 supplied from the video wall controller 63, the video corresponding to the video signal in units of frames. Specifically, the video signal supplied to each display unit 41 is the video signal corresponding to a position of the display unit 41 on the video wall 12. When each display unit 41 displays the video based on the video signal according to the display control signal, the video of one frame is displayed on an entire video wall 12.

The video server 61 includes, for example, a server computer and the like, and supplies the video signal in units of frames of a video content and the like to the video wall controller 63. The video signal in units of frames may be provided from a recording medium such as the PC and a Blu-ray Disc (BD) (registered trademark) in place of the video server 61 to the video wall controller 63.

The PC 62 (information processing system) is a general-purpose computer. The PC 62 controls the video wall controller 63 by generating a control command that controls the video wall controller 63 and transmitting the same to the video wall controller 63.

For example, the PC 62 acquires the exposure time transmitted from the video camera 11. The PC 62 determines a refresh rate of the video wall 12 in such a manner that the exposure time corresponds to a light emission cycle of the LED of the video wall 12. Note that, the refresh rate is the number of times the LED emits light per second. The PC 62 controls the refresh rate by transmitting a refresh rate command, which is a control command indicating the determined refresh rate, to the video wall controller 63.

The video wall controller 63 performs predetermined signal processing on the video signal in units of frames supplied from the video server 61. The video wall controller 63 divides the video signal in units of frames obtained as a result into n pieces according to the position of each display unit 41, and transmits the same to each display unit 41. The video wall controller 63 also transmits the display control signal indicating the refresh rate and the like indicated by the refresh rate command to each display unit 41 on the basis of the refresh rate command supplied from the PC 62.

In the reimaging system 10 configured as described above, the respective devices are subjected to frame synchronization by a GenLock signal. Therefore, for example, an exposure start time of each frame in the video camera 11 is synchronized with a display start time of each frame in the video wall 12.

Note that, the video wall controller 63 and the video wall 12 may be integrally formed, or may be integrated into a display device. Furthermore, the PC 62, the video wall controller 63, and the video wall 12 may be integrally formed, or may be integrated into a display device.

<Configuration Example of Video Camera>

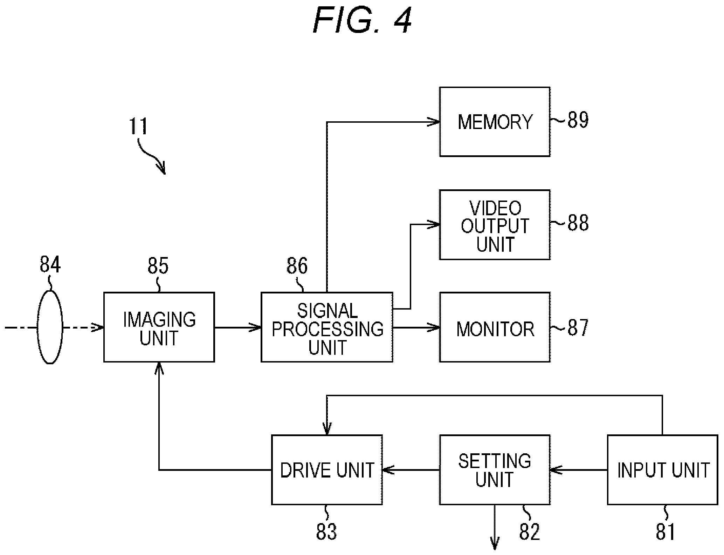

Fig. 4 is a block diagram illustrating a configuration example of the video camera 11 in Fig. 3.

The video camera 11 in Fig. 4 includes an input unit 81, a setting unit 82, a drive unit 83, an optical system 84, an imaging unit 85, a signal processing unit 86, a monitor 87, a video output unit 88, and a memory 89.

The input unit 81 receives the input from the imager 21 and generates an input signal indicating an input content. For example, the imager 21 operates the input unit 81 to input an appropriate exposure time in consideration of restriction of a dynamic range when (intensity of) light is converted into (an amount of) signal charge in the imaging unit 85. In this case, the input unit 81 generates an input signal indicating the exposure time and supplies the same to the setting unit 82. In a case where the imager 21 operates the input unit 81 to input the imaging start instruction, the input unit 81 generates an input signal indicating imaging start and supplies the same to the drive unit 83.

On the basis of the input signal from the input unit 81, the setting unit 82 sets imaging information that is various pieces of information regarding imaging such as the exposure time indicated by the input signal. The setting unit 82 supplies the imaging information to the drive unit 83, and transmits the exposure time out of the imaging information to the PC 62 via a wire such as a coaxial cable.

The drive unit 83 generates a drive signal that is a control signal that drives respective pixel units arranged in a matrix on a light receiving surface of the imaging unit 85 on the basis of the imaging information from the setting unit 82, the imaging start instruction from the input unit 81 and the like, and outputs the same to the imaging unit 85.

The optical system 84 includes one or a plurality of lenses, and guides light (incident light) from the subject and the like to the imaging unit 85 and forms an image on the light receiving surface of the imaging unit 85.

The imaging unit 85 includes a complementary metal oxide semiconductor (CMOS) image sensor and the like. The imaging unit 85 drives each pixel unit according to the drive signal supplied from the drive unit 83, and performs imaging by the rolling shutter system. Specifically, according to the drive signal supplied from the drive unit 83, the imaging unit 85 outputs an electric signal corresponding to the charge accumulated in each pixel unit in units of rows. Then, the imaging unit 85 starts accumulating the charge corresponding to light incident on each pixel unit via the optical system 84 in units of rows. According to the drive signal supplied from the drive unit 83, the imaging unit 85 reads the electric signal corresponding to the charge accumulated for the exposure time set by the setting unit 82 in units of rows and transfers the same to the signal processing unit 86 in units of columns. As described above, the imaging unit 85 performs the imaging with the exposure time set by the setting unit 82.

The signal processing unit 86 performs various pieces of signal processing on the electric signal according to the charge transferred from the imaging unit 85, and converts the same into the video signal in units of frames of a predetermined digital video format. The video signal in units of frames is supplied to the monitor 87 and the video output unit 88, or supplied to the memory 89 to be stored (recorded). The monitor 87 displays the video in units of frames on the basis of the video signal in units of frames supplied from the signal processing unit 86. The video output unit 88 outputs the video signal in units of frames supplied from the signal processing unit 86 to the outside of the video camera 11.

<Configuration Example of PC>

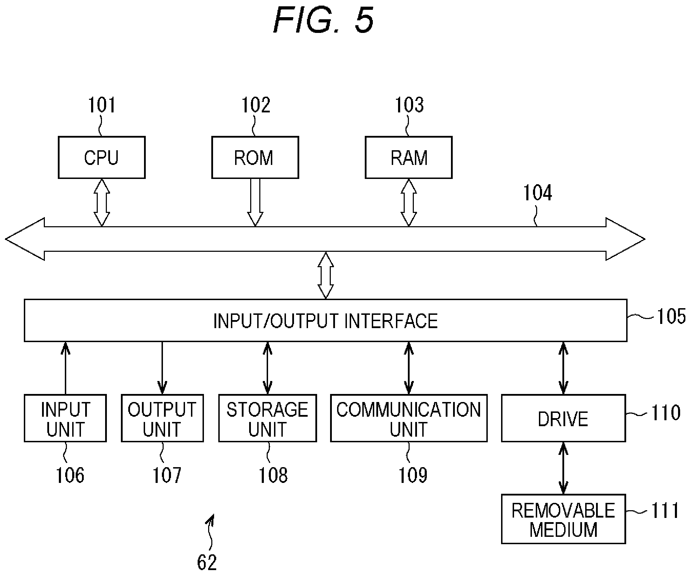

Fig. 5 is a block diagram illustrating a configuration example of hardware of the PC 62 in Fig. 3.

In the PC 62 in Fig. 5, a central processing unit (CPU) 101, a read only memory (ROM) 102, and a random access memory (RAM) 103 are mutually connected to one another by a bus 104.

An input/output interface 105 is further connected to the bus 104. An input unit 106, an output unit 107, a storage unit 108, a communication unit 109, and a drive 110 are connected to the input/output interface 105.

The input unit 106 includes a keyboard, a mouse, a microphone and the like. The output unit 107 includes a display, a speaker and the like. The storage unit 108 includes a hard disk, a non-volatile memory and the like. The communication unit 109 includes a network interface and the like. The drive 110 drives a removable medium 111 such as a magnetic disk, an optical disk, a magnetooptical disk, or a semiconductor memory.

In the PC 62 configured as described above, for example, the CPU 101 loads the program stored in the storage unit 108 into the RAM 103 via the input/output interface 105 and the bus 104 and executes the program, thereby performing various pieces of processing. For example, the CPU 101 performs refresh rate control processing of generating the refresh rate command and controlling the communication unit 109 to transmit the refresh rate to the video wall controller 63.

The program executed by the PC 62 (CPU 101) can be recorded on, for example, the removable medium 111 as a package medium and the like to be provided. Furthermore, the program can be provided via a wired or wireless transmission medium such as a local area network, the Internet, or digital satellite broadcasting.

In the PC 62, the program can be installed in the storage unit 108 via the input/output interface 105 by mounting the removable medium 111 on the drive 110. Furthermore, the program can be received by the communication unit 109 via the wired or wireless transmission medium and installed in the storage unit 108. In addition, the program can be installed in the ROM 102 or the storage unit 108 in advance.

Note that, the program executed by the PC 62 may be a program in which the pieces of processing are performed in time series in the order described in the present specification, or may be a program in which the pieces of processing are performed in parallel or at a required timing such as when a call is made.

<Configuration Example of Refresh Rate Control Unit>

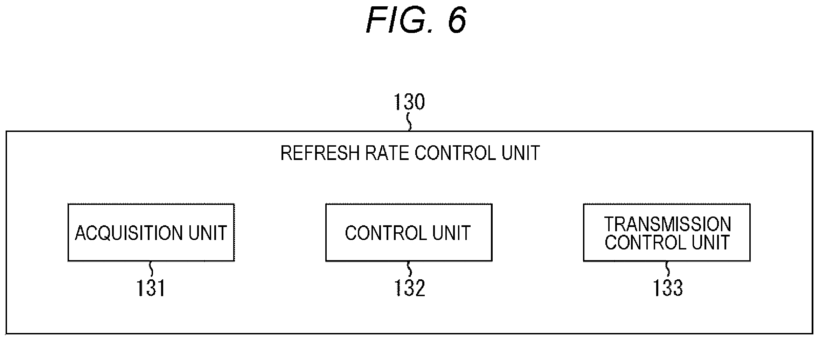

Fig. 6 is a block diagram illustrating a functional configuration example of the CPU 101 in a case where the CPU 101 in Fig. 5 performs the refresh rate control processing.

In a case of performing the refresh rate control processing, the CPU 101 functions as a refresh rate control unit 130 in Fig. 6. The refresh rate control unit 130 includes an acquisition unit 131, a control unit 132, and a transmission control unit 133.

The acquisition unit 131 acquires the exposure time transmitted from the setting unit 82 of the video camera 11 and received via the communication unit 109. The acquisition unit 131 supplies the exposure time to the control unit 132.

The control unit 132 determines the refresh rate of the video wall 12 in such a manner that the exposure time supplied from the acquisition unit 131 corresponds to the light emission cycle of the LED of the video wall 12. The control unit 132 controls the refresh rate by generating the refresh rate command, which is a control command (control signal) indicating the refresh rate. The control unit 132 outputs the refresh rate command to the transmission control unit 133.

The transmission control unit 133 supplies the refresh rate command supplied from the control unit 132 to the communication unit 109, and instructs the same to transmit the refresh rate command to the video wall controller 63. Therefore, the communication unit 109 transmits (outputs) the refresh rate command to the video wall controller 63 via a wire such as a local area network (LAN) cable.

<Configuration Example of Video Wall Controller>

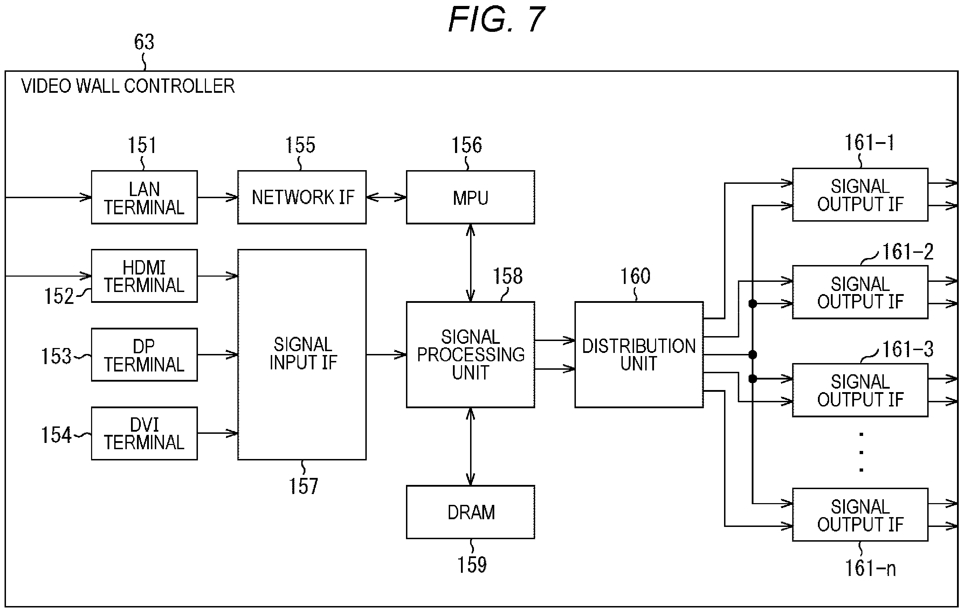

Fig. 7 is a block diagram illustrating a configuration example of the video wall controller 63 in Fig. 3.

The video wall controller 63 includes a LAN terminal 151, a high definition multimedia interface (HDMI) (registered trademark) terminal 152, a display port (DP) terminal 153, a digital visual interface (DVI) terminal 154, a network interface (IF) 155, a micro processor unit (MPU) 156, a signal input IF 157, a signal processing unit 158, a dynamic random access memory (DRAM) 159, a distribution unit 160, and signal output IFs 161-1 to 161-n.

The LAN terminal 151 is a connection terminal of the LAN cable to which the LAN cable connected to the communication unit 109 of the PC 62 is connected. The LAN terminal 151 receives the control command such as the refresh rate command via the LAN cable, and supplies the same to the MPU 156 via the network IF 155.

The MPU 156 generates the display control signal according to the refresh rate command supplied via the network IF 155. Furthermore, the MPU 156 generates a video adjustment signal issuing an instruction to adjust the video signal according to a video adjustment command, which is a control command regarding adjustment of the video signal supplied via the network IF 155. The MPU 156 supplies the display control signal and the adjustment signal to the signal processing unit 158.

The HDMI terminal 152, the DP terminal 153, and the DVI terminal 154 are all input terminals for the video signal. In the example in Fig. 7, the video server 61 and the HDMI terminal 152 are connected to each other, and the video signal in units of frames supplied from the video server 61 is input to the HDMI terminal 152 as an input unit to be acquired by the HDMI terminal 152. The video signal in units of frames input to the HDMI terminal 152 is supplied to the signal input IF 157.

Note that, although the video server 61 and the HDMI terminal 152 are connected to each other in the example in Fig. 7, the HDMI terminal 152, the DP terminal 153, and the DVI terminal 154 merely have different standards and basically have similar functions, and thus any one of them is selected to be connected as necessary.

The signal input IF 157 converts the video signal in units of frames supplied from the HDMI terminal 152 into the video signal in units of frames of a predetermined video format, and supplies the same to the signal processing unit 158.

The signal processing unit 158 performs signal processing required for an entire video wall 12 on the video signal in units of frames supplied via the signal input IF 157 on the basis of the video adjustment signal supplied from the MPU 156 while exchanging data with the DRAM 159 as necessary. Specifically, the signal processing unit 158 adjusts color temperature, contrast, brightness and the like of the video signal on the basis of the video adjustment signal. The signal processing unit 158 supplies the adjusted video signal in units of frames and the display control signal supplied from the MPU 156 to the distribution unit 160.

The distribution unit 160 distributes the video signal in units of frames supplied from the signal processing unit 158 to the signal output IFs 161-1 to 161-n connected to the display units 41-1 to 41-n, respectively. Specifically, the distribution unit 160 (division unit) divides the video signal in units of frames into n pieces according to the position of each display unit 41, and supplies the same to any one of the signal output IFs 161-1 to 161-n connected to the display unit 41. Note that, in a case where it is not required to distinguish the signal output IFs 161-1 to 161-n from one another, they are hereinafter simply referred to as the signal output IFs 161. The distribution unit 160 supplies the display control signal supplied from the signal processing unit 158 to each signal output IF 161.

The signal output IF 161 (output unit) transmits the video signal in units of frames and the display control signal supplied from the distribution unit 160 to the display unit 41 connected to the signal output IF 161. A transmission medium for this transmission may be wired such as the LAN cable or may be wireless.

Note that, it is herein assumed that the control command is automatically transmitted from the PC 62, but may be transmitted in response to a request from the video wall controller 63.

<Detailed Configuration Example of Display Unit>

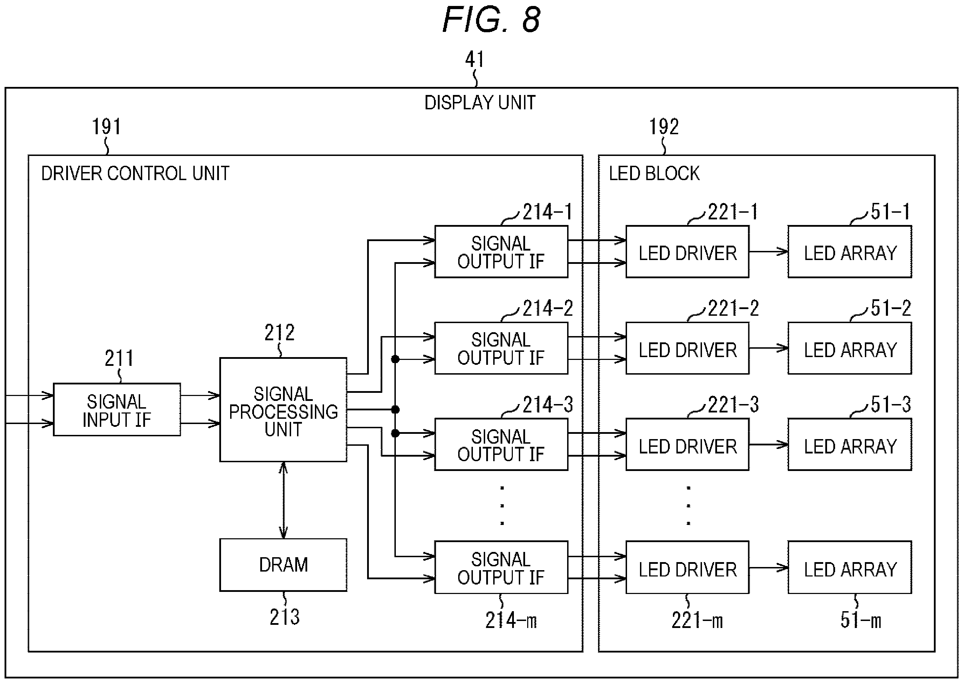

Fig. 8 is a block diagram illustrating a detailed configuration example of the display unit 41.

As illustrated in Fig. 8, the display unit 41 includes a driver control unit 191 and an LED block 192.

The driver control unit 191 includes a signal input IF 211, a signal processing unit 212, a DRAM 213, and signal output IFs 214-1 to 214-m.

The signal input IF 211 receives the video signal in units of frames and the display control signal transmitted from the video wall controller 63 to supply to the signal processing unit 212.

The signal processing unit 212 performs signal processing individually required for its own display unit 41 on the video signal in units of frames supplied from the signal input IF 211 while exchanging data with the DRAM 213 as necessary. Specifically, the signal processing unit 212 performs correction of color and luminance required for its own display unit 41 using a color matrix look up table (LUT) and the like stored in the DRAM 213 on the video signal in units of frames. The signal processing unit 212 divides the video signal in units of frames after the signal processing into m pieces according to a position of each LED array 51 on its own display unit 41. For each LED array 51, the signal processing unit 212 generates, on the basis of the video signal in units of frames after the signal processing, a display signal for setting light emission intensity of each LED forming the LED array 51 in units of frames.

The signal output IFs 214-1 to 214-m corresponding to the LED arrays 51-1 to 51-m, respectively, are connected to the signal processing unit 212. Note that, in a case where it is not required to distinguish the signal output IFs 214-1 to 214-m from one another, they are hereinafter simply referred to as the signal output IFs 214. The signal processing unit 212 supplies the display signal of each LED array 51 to the signal output IF 214 corresponding to the LED array 51. The signal processing unit 212 supplies the display control signal supplied from the signal input IF 211 to each signal output IF 214.

The signal output IF 214 transmits the display signal and the display control signal supplied from the signal processing unit 212 to the LED block 192.

The LED block 192 includes LED drivers 221-1 to 221-m and the LED arrays 51-1 to 51-m.

The LED drivers 221-1 to 221-m are connected to the signal output IFs 214-1 to 214-m of the driver control unit 191, respectively, and are connected to the LED arrays 51-1 to 51-m, respectively. Note that, in a case where it is not required to distinguish the LED drivers 221-1 to 221-m from one another, they are hereinafter simply referred to as the LED drivers 221.

The LED driver 221 drives each LED 241 by performing pulse width modulation (PWM) control on light emission of each LED forming the LED array 51 connected to the same on the basis of the display control signal and the display signal transmitted from the signal output IF 214 connected to the LED driver 221. Specifically, the LED driver 221 generates a PWM signal, which is a digital signal, so that each LED of the LED array 51 emits light at an intensity based on the display signal corresponding to the LED at a refresh rate indicated by the display control signal in one second, and supplies the same to each LED. As a result, the LED array 51 displays the video corresponding to the position on the video wall 12 of the LED array 51 out of the video corresponding to the video signal in units of frames output from the video server 61.

<Configuration Example of LED Array>

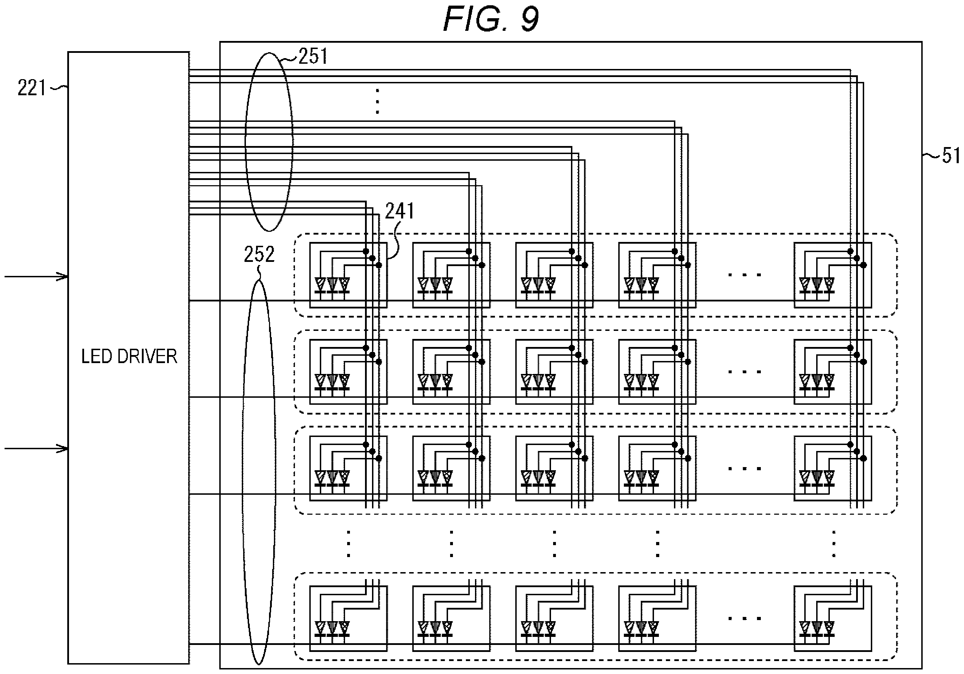

Fig. 9 is a diagram illustrating a configuration example of the LED array 51 in Fig. 8.

As illustrated in Fig. 9, the light emission of the LED array 51 is controlled by a passive-matrix drive system.

Specifically, the LED array 51 includes p×p (p is a positive number) LEDs 241, luminance control wiring (sig line) 251, and row selection wiring (scan line) 252. The LED 241 is a common cathode type LED. The p×p LEDs 241 are arranged in a matrix in which p LEDs are arranged in a row direction (longitudinal direction) and p LEDs are arranged in a column direction (lateral direction). In an example in Fig. 9, the number of LEDs 241 in the row direction and that in the column direction are the same p, but the number of LEDs 241 in the row direction may be different from that in the column direction.

The luminance control wiring 251 is provided for each column of the LEDs 241, and the same luminance control wiring 251 is connected to the LEDs 241 of each column. The row selection wiring 252 is provided for each column of the LEDs 241, and the same row selection wiring 252 is connected to the LEDs 241 of each row.

On the basis of the display control signal supplied from the signal output IF 214, the LED driver 221 controls a light emission timing of the LED 241 in each row so that the LED 241 emits light for each row in a light emission cycle corresponding to the refresh rate indicated by the display control signal.

Specifically, the LED driver 221 performs at least one of adjustment of a frequency of a reference clock or adjustment of an interval until light emission of a next row in such a manner that the LEDs 241 sequentially emit light in units of rows from an upper row and the light emission is performed at an interval corresponding to the refresh rate indicated by the display control signal. Therefore, the LED driver 221 applies predetermined fixed potential to the row selection wiring 252 corresponding to the row at the light emission timing of the LED 241 of each row. Note that, the predetermined fixed potential is typically, but not limited to, GND potential (0 V potential).

The LED driver 221 also inputs, at the light emission timing of the LED 241 of each row, the display signal of each LED 241 of the row to the luminance control wiring 251 corresponding to the column of the LED 241 on the basis of the display signal in units of frames supplied from the signal output IF 214.

As described above, in the LED array 51, at the light emission timing of the LED 241 of each row, each LED 241 of the row emits light of luminance based on the display signal of the LED 241. As a result, in the LED array 51, the video corresponding to the video signal is displayed in units of rows in order from the upper row, and this video is refreshed (updated) by the refresh rate for one second.

<Description of Light Emitting Operation of LED Array>

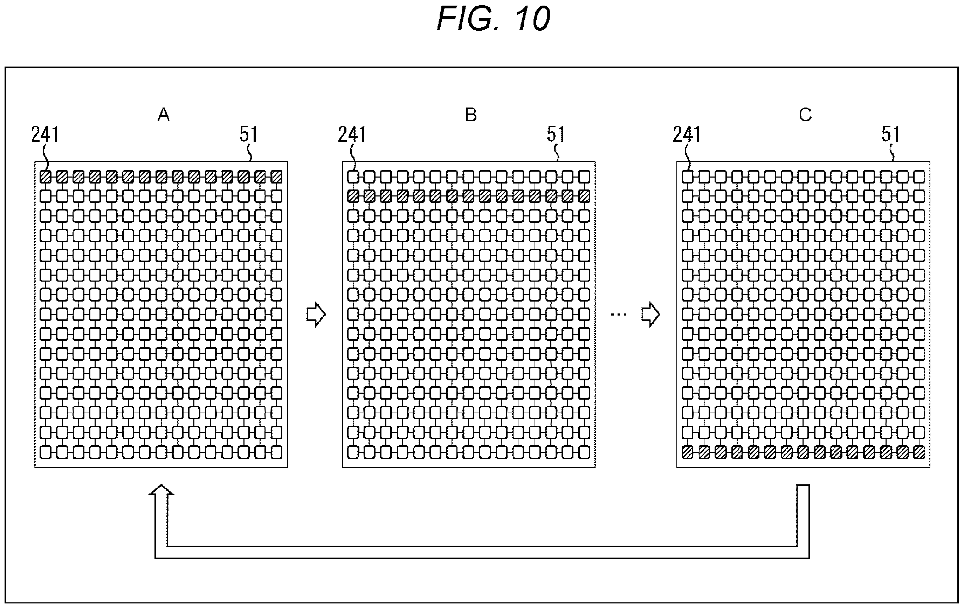

Fig. 10 is a diagram illustrating a light emitting operation of the LED array 51.

In an example in Fig. 10, the LED array 51 includes 15×15 LEDs 241.

As illustrated in A of Fig. 10, in the LED array 51, first, the LEDs 241 in a first row from the top emit light with luminance corresponding to the display signal under the control of the LED driver 221. Next, as illustrated in B of Fig. 10, the LEDs 241 in a second row from the top emit light with luminance corresponding to the display signal under the control of the LED driver 221. Thereafter, similarly, the row of the LEDs 241 that emit light sequentially descends, and as illustrated in C of Fig. 10, the LEDs 241 in the lowermost row emit light with luminance corresponding to the display signal under the control of the LED driver 221. As a result, the LED array 51 displays the video corresponding to the position on the video wall 12 of the LED array 51 out of the video corresponding to the video signal of one frame. In the present specification, this is referred to as one scan.

After the first scan, by the control of the LED driver 221, the LEDs 241 in the first row from the top emit light again with luminance corresponding to the display signal as illustrated in A of Fig. 10. Thereafter, light emission of the LEDs 241 in units of rows is similarly repeated, and the scan is performed by the refresh rate in one second. For example, in a case where the refresh rate indicated by the display control signal is 3840 Hz and the frame rate of the video signal is 60 p (60 frames/second in a progressive system, that is, 60 Hz), the number of times of scan in one frame section is 64 (= 3840 Hz/60 Hz). Since the refresh rate is the number of times of scan performed in one second, it may also be referred to as a scan speed.

<Description of Light Emission Cycle>

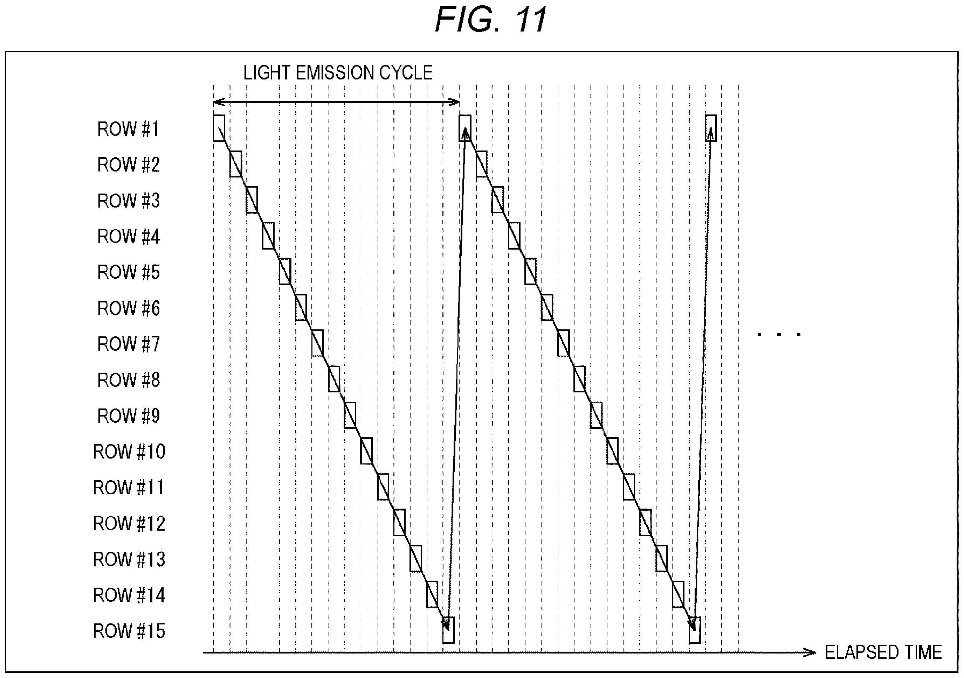

Fig. 11 is a diagram illustrating a light emission cycle of the LED array 51.

In an example in Fig. 11, the LED array 51 includes 15×15 LEDs 241. In a graph in Fig. 11, an elapsed time from the start of display of the video wall 12 is plotted along the abscissa, and the row of the LED array 51 is plotted along the ordinate. In the graph in Fig. 11, an i-th row from the top of the LED array 51 is represented as a row #i. A rectangle in the graph in Fig. 11 indicates that the LED 241 in the row corresponding to the position in the longitudinal direction emits light with luminance corresponding to the display signal at the elapsed time corresponding to the position in the lateral direction of the rectangle.

As illustrated in Fig. 11, in the LED array 51, light emission is performed in units of rows in order from the LED 241 in the upper row. When the light emission of the LEDs 241 of all of the rows #1 to #15 is finished, that is, when one scan is finished, the next scan is started. The cycle of one scan is the light emission cycle of the LED 241 and is the reciprocal of the refresh rate. For example, in a case where the refresh rate is 3840 Hz, the light emission cycle is 1/3840 seconds.

<Description of Cause of Black Belt Occurrence>

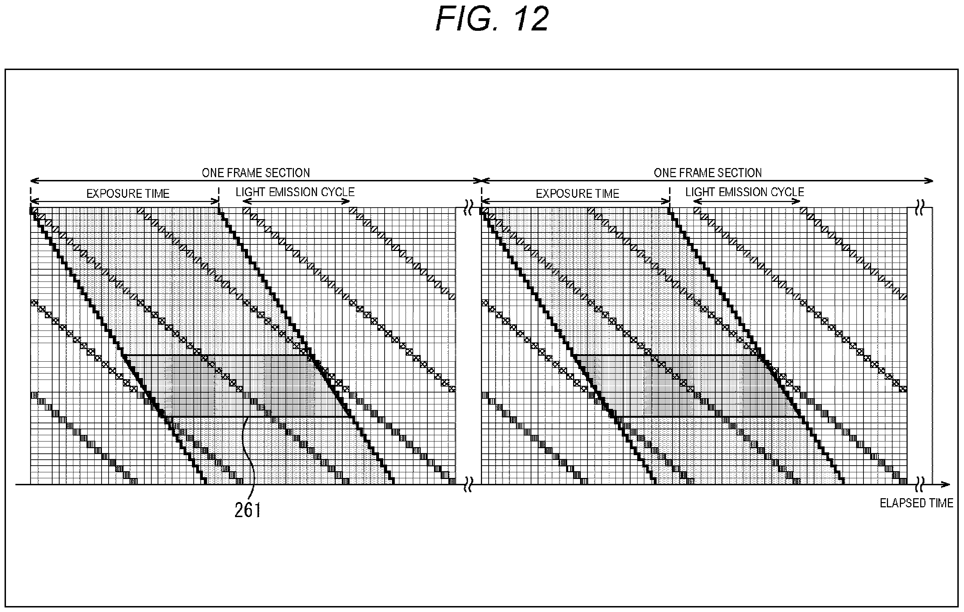

Fig. 12 is a diagram illustrating a cause of occurrence of a black belt in the video reimaged by the reimaging system in a case where the exposure time is not an integral multiple of the light emission cycle of the LED.

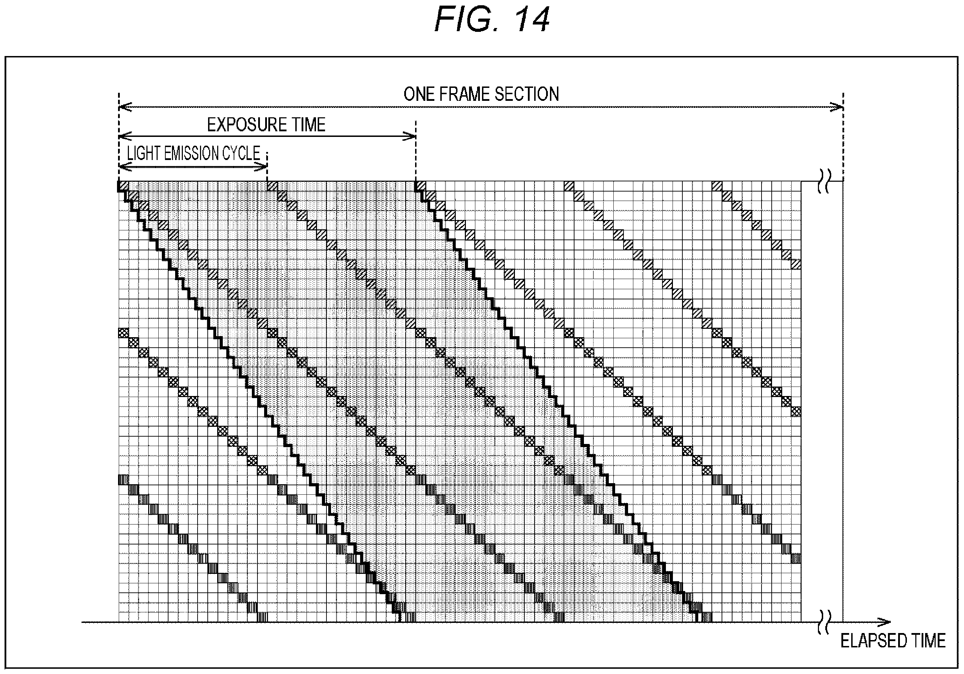

In Fig. 12, the elapsed time from the start of display is plotted along the abscissa, the row of the LEDs is plotted along the ordinate, and the upper position in the drawing indicates that the position of the row of LEDs is higher. In the example in Fig. 12, the number of rows of LEDs forming the LED array is 15, and three LED arrays arranged in the row direction (longitudinal direction) are illustrated. In Fig. 12, a quadrangle with a pattern indicates that the LEDs in the row corresponding to the position in the longitudinal direction of the quadrangle emit light at the elapsed time corresponding to the position in the lateral direction of the quadrangle. The pattern of the quadrangle is different for each LED array including the LEDs in units of rows corresponding to the quadrangle. This is similar in Fig. 14 to be described later.

As illustrated in Fig. 12, first, the LEDs in the first row from the top of each LED array emit light. Next, the LEDs in the second row from the top of each LED array emit light. Thereafter, similarly, the LEDs emit light in units of rows in order from the upper row of each LED array, and when the LEDs of the last row emit light, each LED array finishes the first scan. When each LED array finishes the first scan, this starts second scan.

Thereafter, each LED array similarly repeats the scan, and each LED array performs the scan the number of times corresponding to the refresh rate within one frame section. In an example in Fig. 12, the refresh rate is four times the frame rate, and scan is performed four times within one frame section. That is, in the example in Fig. 12, in a case where the frame rate is 60 p, the refresh rate is 240 Hz.

In contrast, the video camera performs imaging by a rolling shutter system in a predetermined exposure time. Therefore, the exposure by the light of the LED of each row is sequentially performed from the upper row, and an exposure start timing of each row is different. Note that, since each device of the reimaging system performs frame synchronization, the exposure start time and the display start time of one frame are synchronized.

In such a case, when the exposure time of the video camera and the light emission cycle (scan cycle) of the LED do not correspond to each other, that is, when the exposure time is not an integral multiple of the light emission cycle of the LED, a case occurs where the number of times of scan (the number of times of light emission of the LED) in the exposure period is not uniform in each row. In the example in Fig. 12, the LED emits light only once in the exposure period in the row in which the exposure period is in a range of a rectangle 261, but the LED emits light twice in the exposure period in the row in which the exposure period is outside the range of the rectangle 261. Therefore, the luminance of the pixel in the row in which the exposure period is in the range of the rectangle 261 reimaged by the video camera is lower than the luminance of the pixel in the row in which the exposure period is out of the range of the rectangle 261. As a result, out of the video reimaged by the video camera, the video of the row in which the exposure period is in the range of the rectangle 261 becomes the black belt.

<Example of Reimaged Video in Which Black Belt Occurs>

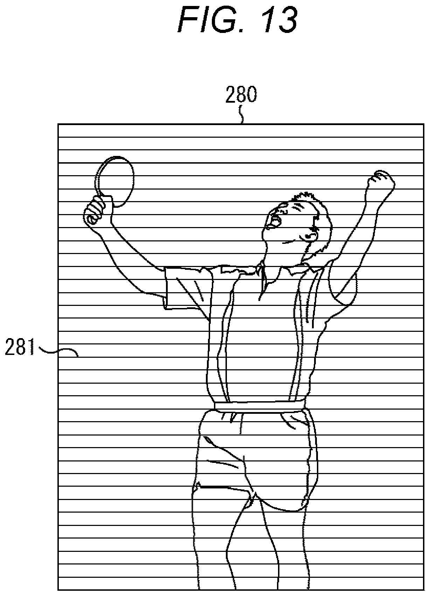

Fig. 13 is a view illustrating an example of the reimaged video in which the black belt occurs due to the cause described with reference to Fig. 12.

In the example in Fig. 13, the refresh rate is 3840 Hz. In the example in Fig. 13, the video camera reimages a person holding a table tennis racket as a subject with the video displayed on the video wall as a background. In a reimaged video 280 obtained as a result, a horizontal black belt 281 might occur as an artifact due to the cause described with reference to Fig. 12. In virtual production, occurrence of the black belt 281 that does not exist at an imaging site in the reimaged video deteriorates a quality of the reimaged video.

<Description of Control of Refresh Rate>

Fig. 14 is a diagram illustrating control of the refresh rate by the control unit 132 in Fig. 6.

As illustrated in Fig. 14, the control unit 132 determines the refresh rate in such a manner that the exposure time of the video camera 11 corresponds to the light emission cycle. Specifically, for example, the control unit 132 synchronizes the exposure start time and the scan start time, and controls the refresh rate so that the exposure time becomes an integral multiple of the light emission cycle.

In the example in Fig. 14, the control unit 132 controls the refresh rate to be 4.6 times the frame rate so that the exposure time is twice the light emission cycle. Therefore, a scan speed increases as compared with the case in Fig. 12, and the scan is performed twice in the exposure period in all rows. As a result, in the video signal in units of frames reimaged by the video camera 11, the row of pixels having low luminance does not occur, and the black belt does not occur.

In the example in Fig. 14, the refresh rate is controlled to increase as compared with the example in Fig. 12, but the refresh rate is only required to be controlled so that the exposure time and the light emission cycle correspond to each other, and may be controlled to decrease as compared with the example in Fig. 12.

<Description of Imaging Processing>

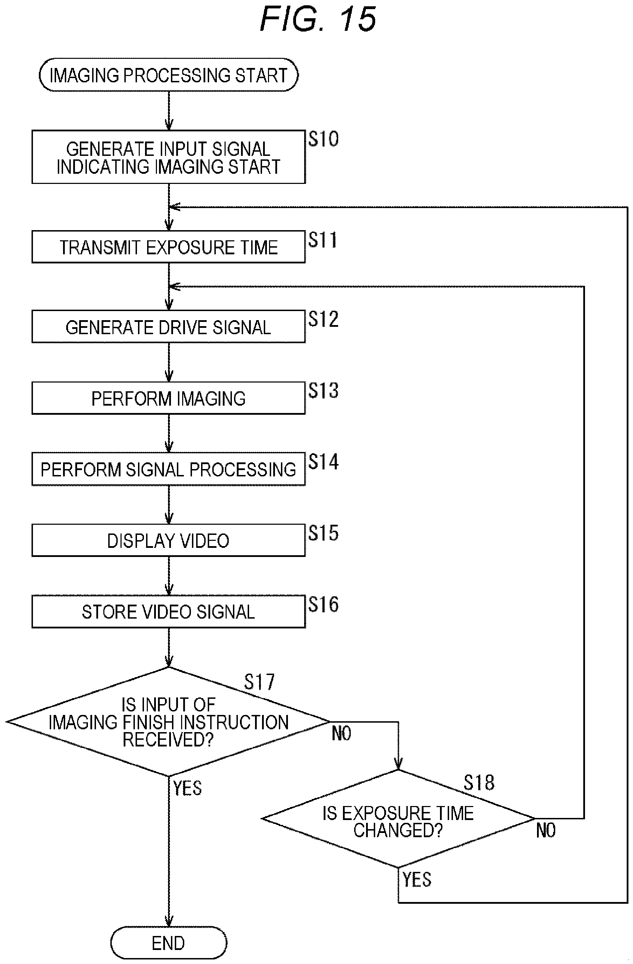

Fig. 15 is a flowchart illustrating imaging processing of the video camera 11. This imaging processing is started, for example, when the imager 21 operates the input unit 81 to input the imaging start instruction.

At step S10 in Fig. 15, the input unit 81 receives the input of the imaging start instruction from the imager 21, and generates the input signal indicating the imaging start and supplies the same to the drive unit 83.

At step S11, the setting unit 82 transmits the exposure time of the set imaging information to the PC 62 and supplies the imaging information to the drive unit 83. The imaging information is input by the imager 21 by operating the input unit 81, and is set by the setting unit 82 on the basis of the input signal generated by the input unit 81 according to the input.

At step S12, the drive unit 83 generates the drive signal on the basis of the imaging information supplied from the setting unit 82 at step S11, and supplies the same to the imaging unit 85.

At step S13, the imaging unit 85 performs the imaging by the rolling shutter system according to the drive signal supplied from the drive unit 83 at step S12, and transfers the charge accumulated for the exposure time in each pixel unit to the signal processing unit 86.

At step S14, the signal processing unit 86 performs various pieces of signal processing on the signal of charge transferred from the imaging unit 85, and converts the same into the video signal in units of frames of a predetermined digital video format.

At step S15, the signal processing unit 86 supplies the video signal in units of frames obtained as a result of the processing at step S14 to the monitor 87, thereby displaying the video in units of frames corresponding to the video signal. At that time, the signal processing unit 86 also supplies the video signal in units of frames obtained as a result of the processing at step S14 to the video output unit 88 as necessary, and allows the video signal to be output to the outside of the video camera 11.

At step S16, the signal processing unit 86 supplies the video signal in units of frames obtained as a result of the processing at step S14 to the memory 89, thereby storing the video signal in the memory 89.

At step S17, the input unit 81 determines whether an imaging finish instruction from the imager 21 is received or not. In a case where it is determined at step S17 that the input of the imaging finish instruction is not yet received, the processing proceeds to step S18.

At step S18, the setting unit 82 determines whether or not the exposure time is changed. Specifically, the setting unit 82 determines whether the input signal indicating a new exposure time is supplied from the input unit 81. In a case where the input signal indicating the new exposure time is supplied from the input unit 81, the setting unit 82 determines that the exposure time is changed at step S18. Then, the setting unit 82 sets the exposure time as the new exposure time, returns the processing to step S11, and repeats subsequent processing.

In contrast, in a case where the input signal indicating the new exposure time is not supplied from the input unit 81, the setting unit 82 determines at step S18 that the exposure time is not changed. Then, the setting unit 82 returns the processing to step S13 and repeats the subsequent processing.

In a case where it is determined at step S17 that the input of the imaging finish instruction is received, the imaging processing is finished.

<Description of Refresh Rate Control Processing>

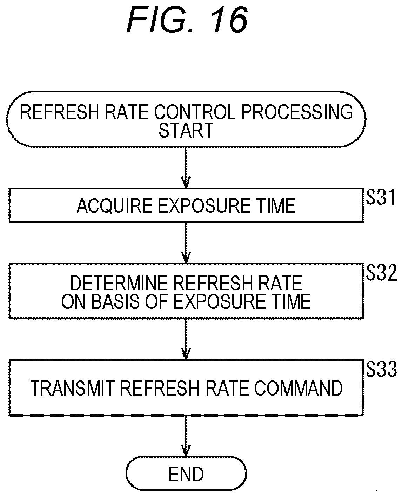

Fig. 16 is a flowchart illustrating refresh rate control processing of the refresh rate control unit 130 in Fig. 6. This refresh rate control processing is started, for example, when the exposure time is transmitted from the setting unit 82 of the video camera 11 by the processing at step S11 in Fig. 15.

At step S31 in Fig. 16, the acquisition unit 131 acquires the exposure time transmitted from the setting unit 82 and received via the communication unit 109, and supplies the exposure time to the control unit 132.

At step S32, the control unit 132 determines the refresh rate of the video wall 12 in such a manner that the exposure time corresponds to the light emission cycle of the LED 241 on the basis of the exposure time supplied from the acquisition unit 131 at step S31. The control unit 132 generates the refresh rate command indicating the refresh rate, and supplies the same to the transmission control unit 133.

At step S33, the transmission control unit 133 supplies the refresh rate command supplied from the control unit 132 at step S32 to the communication unit 109, and instructs the same to transmit the refresh rate command to the video wall controller 63, thereby allowing the transmission of the refresh rate command to the video wall controller 63. Then, the processing is finished.

<Description of Video Signal Processing>

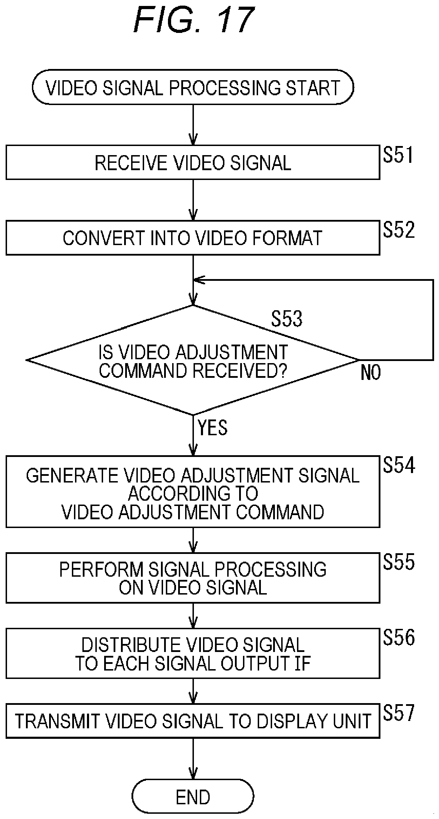

Fig. 17 is a flowchart illustrating video signal processing of the video wall controller 63. This video signal processing is started, for example, when the video signal in units of frames is transmitted from the video server 61.

At step S51 in Fig. 17, the signal input IF 157 of the video wall controller 63 receives the video signal in units of frames transmitted from the video server 61 via the HDMI terminal 152.

At step S52, the signal input IF 157 converts the video signal in units of frames supplied at step S51 into the video signal in units of frames of a predetermined video format, and supplies the same to the signal processing unit 158.

At step S53, the MPU 156 determines whether the video adjustment command is received from the communication unit 109 of the PC 62 via the LAN terminal 151 and the network IF 155. In a case of determining that the video adjustment command is not received yet at step S53, the MPU 156 stands by until the video adjustment command is received.

In contrast, in a case where the MPU 156 determines that the video adjustment command is received at step S53, the processing proceeds to step S54. At step S54, the MPU 156 generates the video adjustment signal according to the video adjustment command, and supplies the same to the signal processing unit 158.

At step S55, the signal processing unit 158 performs signal processing required for an entire video wall 12 on the video signal in units of frames on the basis of the video adjustment signal while exchanging data with the DRAM 159 as necessary. The signal processing unit 158 supplies the adjusted video signal in units of frames to the distribution unit 160.

At step S56, the distribution unit 160 distributes the video signal in units of frames supplied from the signal processing unit 158 at step S55 to each signal output IF 161.

At step S57, each signal output IF 161 transmits the video signal in units of frames supplied from the distribution unit 160 at step S56 to the display unit 41 connected to the same. Then, the video signal processing is finished.

<Description of Display Control Signal Generation Processing>

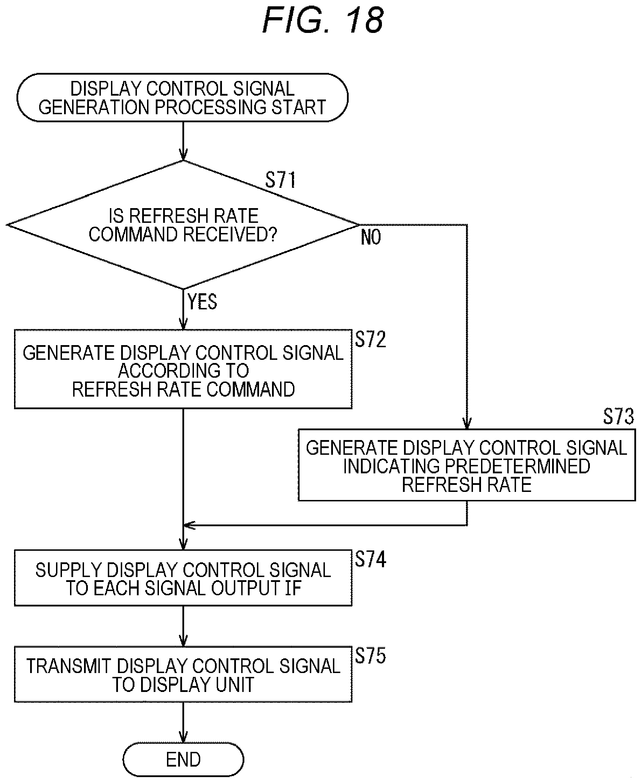

Fig. 18 is a flowchart illustrating display control signal generation processing of the video wall controller 63. This display control signal generation processing is started, for example, when the video signal in units of frames is transmitted from the video server 61.

At step S71 in Fig. 18, the MPU 156 determines whether the refresh rate command is received from the communication unit 109 of the PC 62 via the LAN terminal 151 and the network IF 155. In a case where it is determined at step S71 that the refresh rate command is received, the MPU 156 allows the processing to proceed to step S72.

At step S72, the MPU 156 generates the display control signal according to the received refresh rate command, and supplies the display control signal to the distribution unit 160 via the signal processing unit 158. Then, the processing proceeds to step S74.

In contrast, in a case where it is determined at step S71 that the refresh rate command is not yet received, at step S73, the MPU 156 generates the display control signal indicating a predetermined refresh rate, and supplies the display control signal to the distribution unit 160 via the signal processing unit 158. Then, the processing proceeds to step S74.

At step S74, the distribution unit 160 supplies the display control signal to each signal output IF 161. At step S75, each signal output IF 161 transmits the display control signal supplied from the distribution unit 160 at step S74 to the display unit 41 connected to the same. Then, the display control signal generation processing is finished.

<Description of Display Processing>

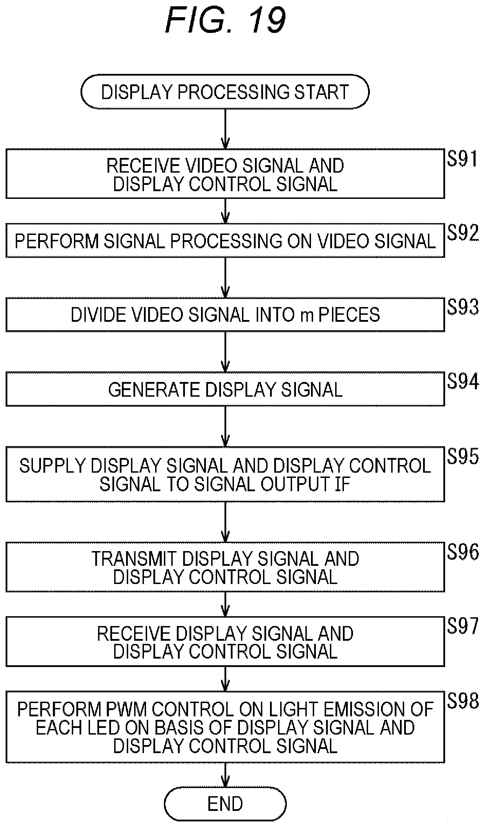

Fig. 19 is a flowchart illustrating display processing of each display unit 41. This display processing is started, for example, when the video signal is transmitted by the processing at step S57 in Fig. 17 and the display control signal is transmitted by the processing at step S75 in Fig. 18.

At step S91 in Fig. 19, the signal input IF 211 receives the video signal in units of frames and the display control signal transmitted from the video wall controller 63 to supply to the signal processing unit 212.

At step S92, the signal processing unit 212 performs signal processing individually required for its own display unit 41 on the video signal in units of frames supplied from the signal input IF 211 at step S91 while exchanging data with the DRAM 213 as necessary.

At step S93, the signal processing unit 212 divides the video signal in units of frames after the signal processing into m pieces according to a position of each LED array 51 on its own display unit 41. At step S94, for each LED array 51, the signal processing unit 212 generates, on the basis of the video signal in units of frames after the signal processing, the display signal of each LED forming the LED array 51 in units of frames.

At step S95, the signal processing unit 212 supplies the display signal of each LED array 51 to the signal output IF 214 corresponding to the LED array 51, and supplies the display control signal supplied from the signal input IF 211 by the processing at step S91 to each signal output IF 214.

At step S96, each signal output IF 214 transmits the video signal and the display control signal to the LED driver 221 connected to the same.

At step S97, each LED driver 221 receives the display signal and the display control signal transmitted from the signal output IF 214 connected to the same. At step S98, each LED driver 221 drives each LED 241 by performing PWM control on light emission of each LED 241 forming the LED array 51 connected to the same on the basis of the display signal and the display control signal. As a result, each LED array 51 displays the video corresponding to the position on the video wall 12 of the LED array 51 out of the video corresponding to the video signal in units of frames output from the video server 61.

As described above, in the reimaging system 10, the PC 62 controls the refresh rate of the video wall 12 in such a manner that the exposure time of the video camera 11 that images the video wall 12 corresponds to the light emission cycle of the LED 241. Therefore, it is possible to prevent the occurrence of the black belt in a case where the video wall 12 is reimaged.

Furthermore, since the PC 62 acquires the exposure time and controls the refresh rate on the basis of the exposure time, even in a case where the exposure time changes, the refresh rate can be easily controlled on the basis of the exposure time after the change, and the occurrence of the black belt can be prevented.

<Description of Example of Reimaging System>

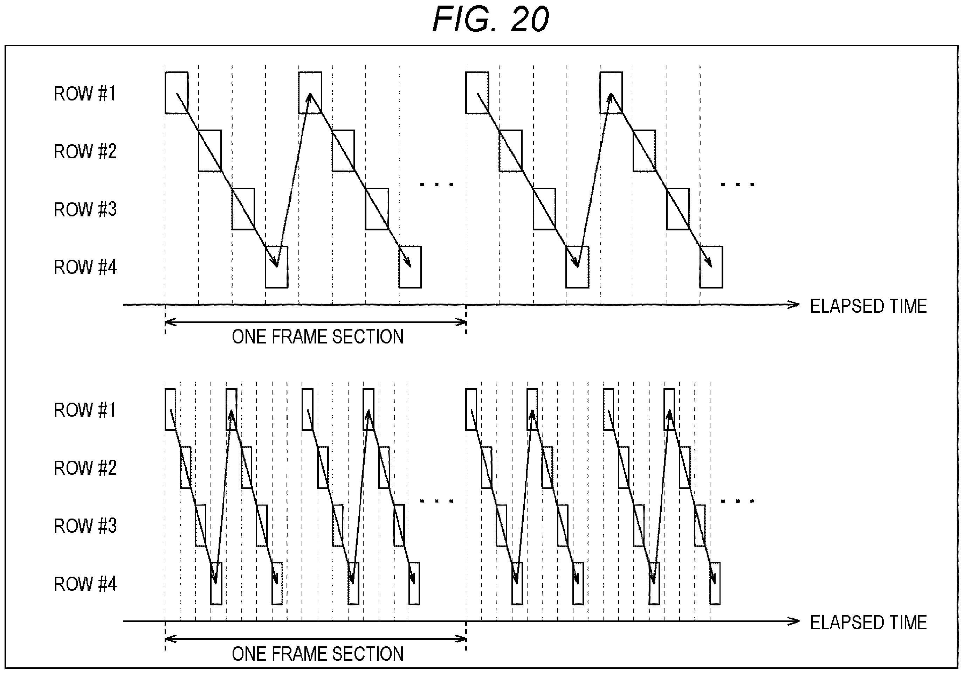

Fig. 20 is a diagram illustrating an example of a reimaging system that reduces visibility of the black belt by a conventional method.

In the example in Fig. 20, there are four rows of LEDs forming the LED array. In a graph in Fig. 20, an elapsed time from the start of display of the video wall is plotted along the abscissa, and the row of the LED array is plotted along the ordinate. In the graph in Fig. 20, an i-th row from the top of the LED array is represented as a row #i. A rectangle in the graph in Fig. 20 indicates that the LED in the row corresponding to the position in the longitudinal direction emits light at the elapsed time corresponding to the position in the lateral direction of the rectangle.

The reimaging system that reduces the visibility of the black belt by the conventional method shortens the light emission cycle of the LED, that is, increases the refresh rate, thereby reducing the visibility of the black belt. Specifically, for example, the reimaging system doubles the refresh rate illustrated in the upper stage of Fig. 20 as illustrated in the lower stage of Fig. 20.

Therefore, even in a case where the exposure time of the video camera and the light emission cycle of the LED do not correspond to each other, and the number of times of light emission of the LED in the exposure period in each row is not uniform, it is possible to suppress nonuniformity of luminance in each row.

For example, in a case where the number of times of scan in one frame section is 64, when a difference in the number of times of light emission of a certain row from other rows is -1, the luminance of the row is reduced by 1/64 (about 1.56%) compared to the luminance of the other rows. In contrast, when the refresh rate is doubled and the number of times of scan in one frame section is 128, when the difference in the number of times of light emission of a certain row from other rows is -1, the luminance of the row is reduced by only 1/128 (about 0.78%) compared to the luminance of the other rows. As described above, by increasing the refresh rate, nonuniformity of luminance in each row is suppressed.

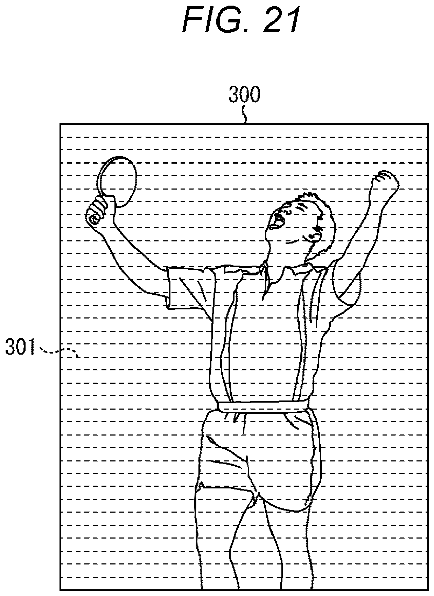

Fig. 21 is a view illustrating an example of the reimaged video in which the visibility of the black belt is reduced due to the reimaging system described with reference to Fig. 20.

In the example in Fig. 21, the refresh rate is 7680 Hz, and the subject and the background similar to those in Fig. 13 are reimaged.

As illustrated in Fig. 21, even in the reimaged video 300 in which the refresh rate is 7680 Hz, which is twice as high as 3840 Hz, a horizontal black belt 301 occurs, but the black belt 301 is less visible than the black belt 281 in the reimaged video 280 in Fig. 13 in which the refresh rate is 3840 Hz.

However, in the conventional method, although the visibility of the black belt is reduced, the black belt does not disappear. Furthermore, in order to increase the refresh rate while maintaining display gradation accuracy of the LED, it is necessary to increase the frequency of the reference clock used for PWM control of the LED driver or to reduce the number of rows of the LEDs caused to emit light in one scan.

Specifically, in the PWM control, since the control signal is generated by integrating the reference clock with the counter, for example, it is necessary to increase the frequency of the reference clock in order to maintain the display gradation accuracy of the LED and increase the refresh rate.

The frequency f [Hz] of the reference clock is expressed by following expression (1) using a refresh rate RR [Hz], display gradation accuracy t [bit], and the number L [row] of rows of LEDs caused to emit light in one scan.

$$f = PR \times 2^t \times L \ \ldots \ (1)$$

For example, in a case where the refresh rate is 3840 Hz, the display gradation accuracy is 12 bits, and the number of rows of LEDs caused to emit light in one scan is 16, the frequency of the reference clock is about 251.7 MHz. In contrast, when the refresh rate is 7680 Hz, which is twice as high as 3840 Hz, the frequency of the reference clock is also about 503.3 MHz, which is twice as high as that when the refresh rate is 3840 Hz. As described above, when the frequency (operating frequency) of the reference clock of the LED driver increases, a cost increases due to power consumption of the LED driver, a change in manufacturing process of the LED driver and the like.

In contrast, in a case where the refresh rate is increased while maintaining the frequency of the reference clock, it is necessary to reduce the number of rows of LEDs caused to emit light in one scan, as expressed by above-described expression (1). In order to reduce the number of rows of LEDs caused to emit light in one scan, it is necessary to increase the number of LED drivers. For example, in a case where the number of rows of LEDs caused to emit light in one scan is reduced to 1/2 in order to double the refresh rate, it is necessary to double the number of LED drivers. This leads to an increase in cost and a shortage of a component mounting area on a substrate. Furthermore, as the number of LED drivers increases, the dark power also increases. The dark power is power consumed even when the LED does not emit light, and is power consumed mainly by the LED driver, a control circuit for driving the LED driver, a power supply circuit and the like.

Note that, as expressed by above-described expression (1), it is possible to increase the refresh rate while maintaining the frequency of the reference clock and the number of rows of LEDs caused to emit light in one scan by lowering the display gradation accuracy, a so-called gray scale. For example, the refresh rate can be doubled by reducing the display gradation accuracy by one bit. However, when the display gradation accuracy is lowered, the quality of the reimaged video is deteriorated. The deterioration in display gradation accuracy can be suppressed by slightly increasing the frequency of the reference clock, but the quality of the reimaged video is deteriorated in either case.

In contrast, in the reimaging system 10, the occurrence of the black belt can be prevented only by controlling the refresh rate on the basis of the exposure time. Therefore, a significant increase in manufacturing cost and the deterioration in display gradation accuracy do not occur.

Note that, it is also possible that the refresh rate control unit 130 does not control the refresh rate but the user controls the refresh rate. In this case, the exposure time is not transmitted from the video camera 11, and the user determines the refresh rate in such a manner that the exposure time corresponds to the light emission cycle of the LED 241 and inputs the refresh rate to the PC 62 using the input unit 106. Then, the PC 62 generates the display control signal indicating the refresh rate and the like input by the user.

In the reimaging system 10, the exposure time is transmitted from the video camera 11 to the PC 62, but the user may operate the input unit 106 to input the exposure time of the video camera 11, and the refresh rate control unit 130 may acquire the exposure time.

In the reimaging system 10, the PC 62 controls the refresh rate on the basis of the exposure time, but the video camera 11 may transmit the exposure time to the video wall controller 63 and the video wall 12, and at least a part of the video wall controller 63 or the video wall 12 may function as the refresh rate control unit 130.

<Second Embodiment>

<Configuration Example of Reimaging System>

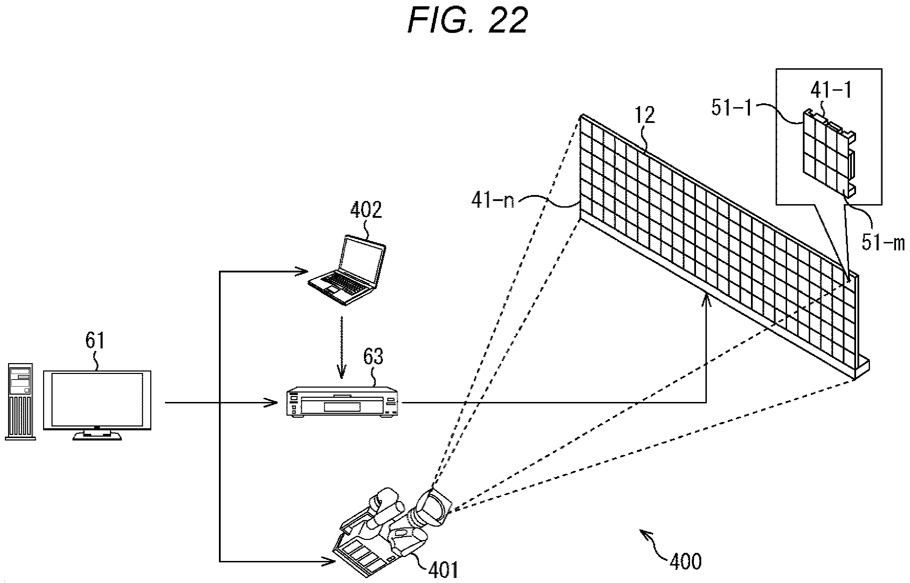

Fig. 22 is a diagram illustrating a configuration example of a second embodiment of a reimaging system including an information processing system to which the present technology is applied.

In a reimaging system 400 in Fig. 22, portions corresponding to portions of the reimaging system 10 in Fig. 3 are denoted by the same reference signs. Therefore, description of the portions will be appropriately omitted, and description will be given focusing on portions different from those of the reimaging system 10.

The reimaging system 400 in Fig. 22 is different from the reimaging system 10 in that the video camera 11 is replaced with a video camera 401 and the PC 62 is replaced with a PC 402, and is configured similarly to the reimaging system 10 except for this. In the reimaging system 400, the PC 402 does not control a refresh rate on the basis of an exposure time of the video camera 401, but the video camera 401 controls the exposure time on the basis of the refresh rate.

Specifically, the video camera 401 (information processing system) is an imaging device that images by a rolling shutter system. The video camera 401 receives an imaging start instruction from an imager 21, and requires the refresh rate from the PC 402. The video camera 401 sets the exposure time in such a manner that a light emission cycle of an LED 241 of a video wall 12 corresponds to the exposure time on the basis of the refresh rate transmitted from the PC 402 in response to the request. The video camera 401 images a video displayed on the video wall 12 as a background with the set exposure time. Note that, in the reimaging system 400, a plurality of video cameras similar to the video camera 401 may be used.

The PC 402 is a general-purpose computer, and is configured similarly to the PC 62 in Fig. 5. The PC 402 transmits a currently set refresh rate to the video camera 401 in response to the request from the video camera 401. This refresh rate is set by a user, for example.

The PC 402 controls a video wall controller 63 by generating a control command and transmitting the same to the video wall controller 63. For example, the PC 402 transmits a refresh rate command indicating the currently set refresh rate to the video wall controller 63.

In the reimaging system 400 configured as described above, the respective devices are subjected to frame synchronization by a GenLock signal similarly to the reimaging system 10.

<Configuration Example of Video Camera>

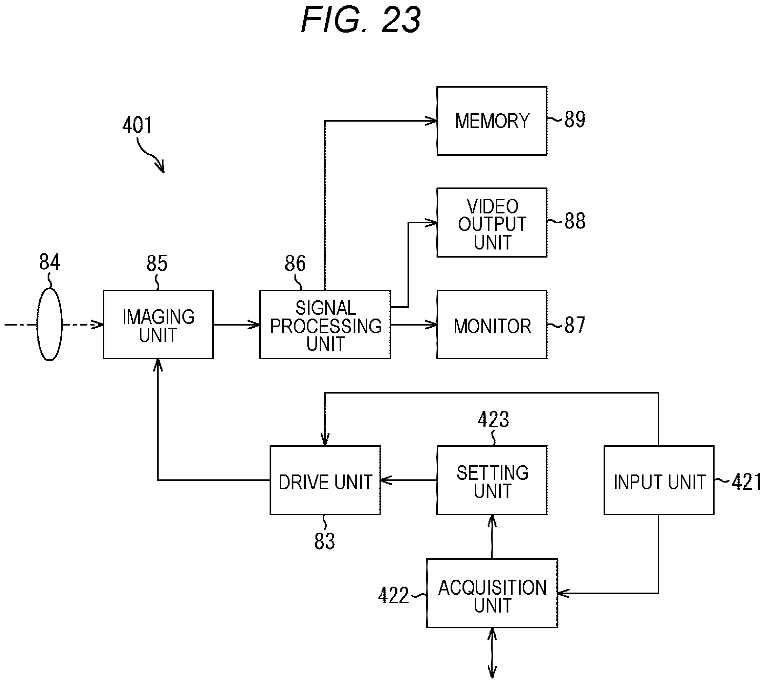

Fig. 23 is a block diagram illustrating a configuration example of the video camera 401 in Fig. 22.
In the video camera 401 in Fig. 23, portions corresponding to those of the video camera 11 in Fig. 4 are denoted by the same reference numerals. Therefore, description of the portions will be appropriately omitted, and description will be given focusing on portions different from those of the video camera 11.
The video camera 401 in Fig. 23 is different from the video camera 11 in that the input unit 81 and the setting unit 82 are replaced with an input unit 421 and a setting unit 423, respectively, and that an acquisition unit 422 is newly provided, and is configured similarly to the video camera 11 except for this.
The input unit 421 receives the input from the imager 21 and generates an input signal indicating an input content. For example, in a case where the imager 21 operates the input unit 421 to input the imaging start instruction, the input unit 421 generates an input signal indicating imaging start. The input unit 421 supplies the input signal to a drive unit 83 and the acquisition unit 422.
The acquisition unit 422 requires the refresh rate from the PC 402 in response to the input signal supplied from the input unit 421. The acquisition unit 422 acquires the refresh rate transmitted from the PC 402 in response to the request, and supplies the same to the setting unit 423. Communication between the acquisition unit 422 and the PC 402 is performed, for example, via a wire such as a coaxial cable.
The setting unit 423 sets the exposure time in such a manner that the exposure time corresponds to the light emission cycle of the LED 241 corresponding to the refresh rate on the basis of the refresh rate supplied from the acquisition unit 422. The setting unit 423 sets imaging information other than the exposure time as necessary. The setting unit 423 supplies the imaging information including the exposure time to the drive unit 83. Here, the drive unit 83 generates a drive signal on the basis of the imaging information from the setting unit 423, the imaging start instruction from the input unit 421 and the like, and outputs the same to the imaging unit 85. Therefore, the setting unit 423 and the drive unit 83 function as a control unit that generates the drive signal so that the exposure time and the light emission cycle correspond to each other, and outputs the drive signal to the imaging unit 85.

<Description of Setting of Exposure Time>

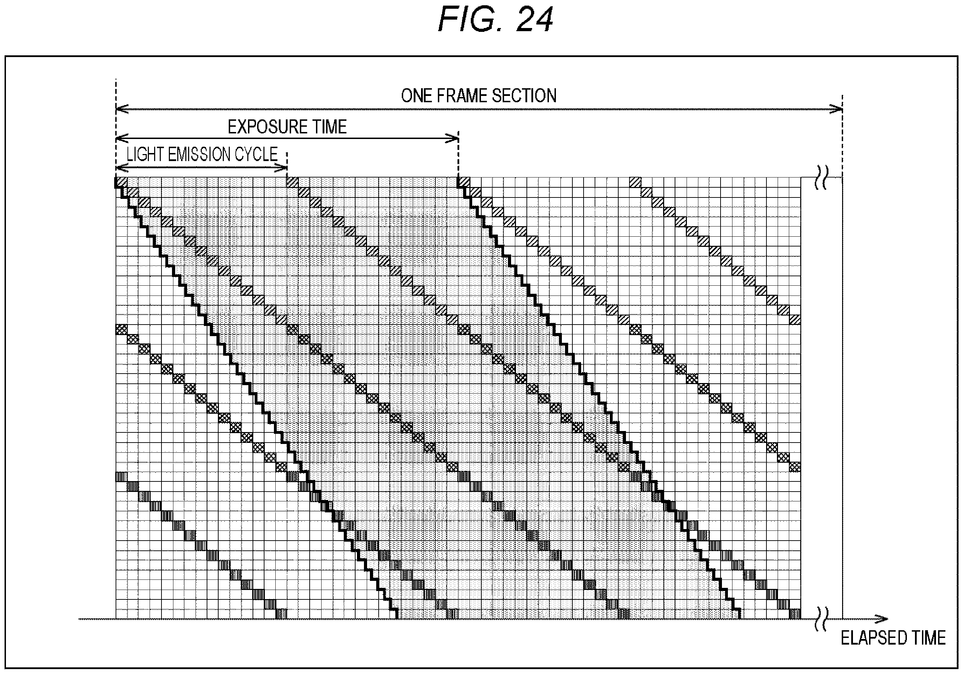

Fig. 24 is a diagram illustrating the setting of the exposure time by the setting unit 423 in Fig. 23.
As illustrated in Fig. 24, the setting unit 423 sets the exposure time in such a manner that the exposure time of the video camera 401 corresponds to the light emission cycle. Specifically, for example, the setting unit 423 sets the exposure time in such a manner that the exposure time is an integral multiple of the light emission cycle.
In the example in Fig. 24, the setting unit 423 sets the exposure time in such a manner that the exposure time is twice the light emission cycle. Therefore, the exposure time is extended as compared with the case in Fig. 12, and scan is performed twice in an exposure period in all rows. As a result, in the video signal in units of frames reimaged by the video camera 401, the row of pixels having low luminance does not occur, and the black belt does not occur.
In the example in Fig. 24, the exposure time is set to be extended as compared with the example in Fig. 12, but the exposure time is only required to be set to correspond to the light emission cycle, and may be set to be shortened as compared with the example in Fig. 12.

<Description of Imaging Processing>

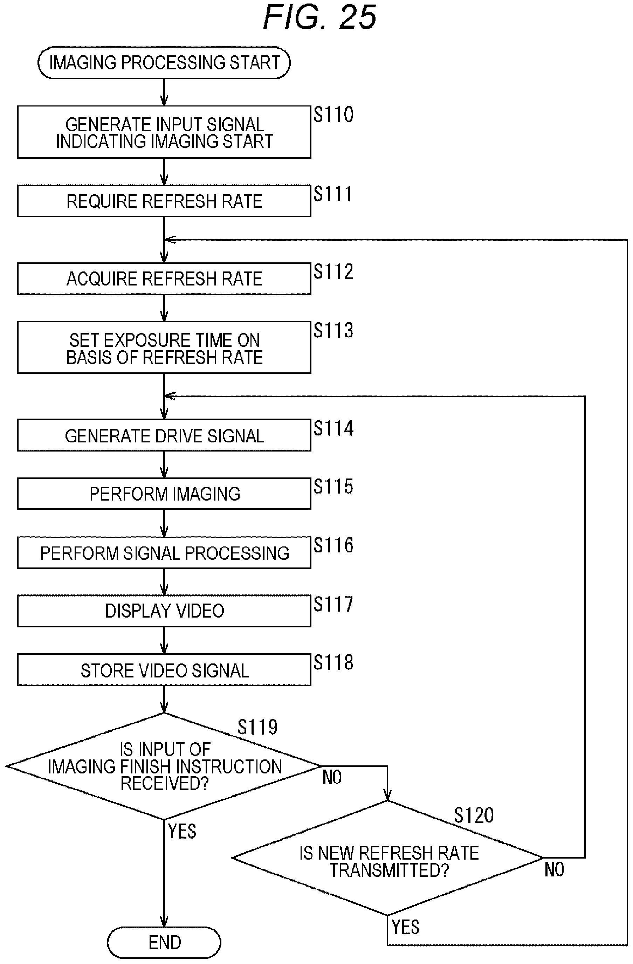

Fig. 25 is a flowchart illustrating imaging processing of the video camera 401. This imaging processing is started, for example, when the imager 21 operates the input unit 421 to input the imaging start instruction.
At step S110 in Fig. 25, the input unit 421 receives the input of the imaging start instruction from the imager 21, and generates an input signal indicating imaging start. The input unit 421 supplies the input signal to a drive unit 83 and the acquisition unit 422.
At step Sill, the acquisition unit 422 requires the refresh rate from the PC 402 in response to the input signal supplied from the input unit 421. At step S112, the acquisition unit 422 acquires the refresh rate transmitted from the PC 402 in response to the request, and supplies the same to the setting unit 423.
At step S113, the setting unit 423 sets the exposure time in such a manner that the exposure time corresponds to the light emission cycle of the LED 241 corresponding to the refresh rate on the basis of the refresh rate acquired at step S112. The setting unit 423 sets imaging information other than the exposure time as necessary. The setting unit 423 supplies the imaging information including the exposure time to the drive unit 83.
Processing at steps S114 to S118 is similar to the processing at steps S12 to S16 in Fig. 15, so that the description thereof is omitted.
After the processing at step S118, at step S119, the input unit 421 determines whether an imaging finish instruction from the imager 21 is received or not. In a case where it is determined at step S119 that the input of the imaging finish instruction is not yet received, the processing proceeds to step S120.
At step S120, the acquisition unit 422 determines whether a new refresh rate is transmitted from PC 402. Specifically, in a case where the refresh rate is changed by an instruction of the user and the like, the PC 402 transmits the changed refresh rate to the video camera 401. At that time, the acquisition unit 422 determines that the new refresh rate is transmitted from the PC 402 at step S120.

In a case where it is determined at step S120 that the new refresh rate is transmitted from the PC 402, the processing returns to step S112 and subsequent processing is repeated.

In contrast, in a case where it is determined at step S120 that the new refresh rate is not transmitted from the PC 402, that is, in a case where the refresh rate is not changed, the processing returns to step S114, and the subsequent processing is repeated.

In a case where it is determined at step S119 that the input of the imaging finish instruction is received, the acquisition unit 422 requires the PC 402 to finish transmitting the refresh rate, and the imaging processing is finished.

<Description of Refresh Rate Transmission Processing>

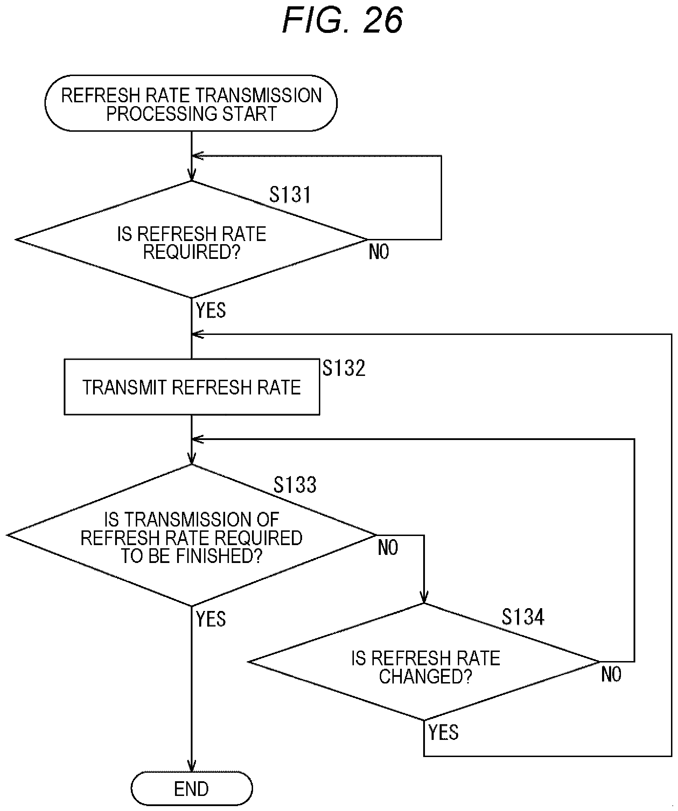

Fig. 26 is a flowchart illustrating refresh rate transmission processing of the PC 402.

At step S131 in Fig. 26, the PC 402 determines whether the refresh rate is required from the acquisition unit 422 of the video camera 401 by the processing at step S111 in Fig. 25. In a case where it is determined at step S131 that the refresh rate is not yet required, this stands by until the refresh rate is required.

In a case where it is determined at step S131 that the refresh rate is required, the processing proceeds to step S132. At step S132, the PC 402 transmits the currently set refresh rate to the video camera 401.

At step S133, the PC 402 determines whether the acquisition unit 422 requires to finish transmitting the refresh rate. In a case where it is determined at step S133 that the transmission of the refresh rate is not required to be finished, the processing proceeds to step S134.

At step S134, the PC 402 determines whether the refresh rate is changed by the instruction of the user and the like. In a case where it is determined at step S134 that the refresh rate is changed, the processing returns to step S132 and subsequent processing is repeated.

In contrast, in a case where it is determined at step S134 that the refresh rate is not changed, the processing returns to step S133 and subsequent processing is repeated.

In a case where it is determined at step S133 that the transmission of the refresh rate is required to be finished, the refresh rate transmission processing is finished.

As described above, in the reimaging system 400, the video camera 401 sets the exposure time in such a manner that the exposure time corresponds to the light emission cycle of the LED 241 corresponding to the refresh rate of the video wall 12. Therefore, it is possible to prevent the occurrence of the black belt in a case where the video wall 12 is reimaged.

Furthermore, since the video camera 401 acquires the refresh rate and sets the exposure time on the basis of the refresh rate, even in a case where the refresh rate changes, the exposure time can be easily set on the basis of the refresh rate after the change, and the occurrence of the black belt can be prevented.

Note that, in the reimaging system 400 described above, the video camera 401 sets the exposure time on the basis of the refresh rate, it is possible to determine a plurality of candidates for the exposure time corresponding to the light emission cycle of the LED 241. In this case, the video camera 401 displays the candidates for the exposure time on a monitor 87 and the like, and the imager 21 operates the input unit 421 to input an instruction to select a desired exposure time from the candidates for the exposure time. The input unit 421 receives the input and supplies an input signal indicating selection of the desired exposure time of the imager 21 to the setting unit 423, and the setting unit 423 sets the desired exposure time of the imager 21 on the basis of the input signal.

In the reimaging system 400, the video camera 401 determines the exposure time on the basis of the refresh rate, but it is possible that the PC 402 determines the exposure time on the basis of the refresh rate and transmits the same to the video camera 401. In this case, the acquisition unit 422 acquires the exposure time, and the setting unit 423 sets the exposure time.

In the reimaging system 400, the PC 402 sets the refresh rate, but the video wall controller 63 or the video wall 12 can set the refresh rate. In this case, the refresh rate is transmitted from the video wall controller 63 or the video wall 12 that sets the refresh rate to the video camera 401.

In the first and second embodiments, the PC 62 (402) exchanges signals with the video camera 11 (401) via a wire such as a coaxial cable, but may exchange signals by wireless communication. Similarly, the PC 62 (402) exchanges signals with the video wall controller 63 via a wire such as a LAN cable, but may exchange signals by wireless communication.

The above-described series of processing can be executed by hardware or software.

The reimaging system 10 (400) may be provided with a plurality of video wall controllers 63 such that each video wall controller 63 divides and controls the video wall 12. In a case where the video wall 12 includes one display unit 41, it is possible that the video wall controller 63 is not provided. In this case, the video signal in units of frames output from the video server 61 and the control command output from the PC 62 (402) are directly input to the video wall 12.

In the present specification, a system is intended to mean a set of a plurality of components (devices, modules (parts), processing and the like), and it does not matter whether or not all the components are in the same housing. Therefore, all of a plurality of devices accommodated in different housings and connected via a network, one device in which a plurality of modules is accommodated in one housing, and a processing unit that performs a plurality of pieces of processing are systems.

The embodiments of the present technology are not limited to the above-described embodiment, and various modifications may be made without departing from the gist of the present technology.

For example, it is possible to adopt a mode obtained by combining all or some of the plurality of embodiments described above.

For example, the present technology can have a cloud computing configuration in which one function is shared and processed in cooperation by a plurality of devices via a network.

Furthermore, each of the steps described in the above-described flowcharts can be executed by one device or executed by a plurality of devices in a shared manner.

Moreover, in a case where a plurality of pieces of processing is included in one step, the plurality of pieces of processing included in the one step can be executed by one device or executed by a plurality of devices in a shared manner.

Note that, the effects described in the present specification are merely examples and are not limited, and there may be effects other than those described in the present specification.

Note that, the present technology can have the following configurations.

(1) An information processing system including:
a control unit that generates a control signal for driving a pixel in such a manner that a light emission cycle of a display and an exposure time of an imaging unit for imaging the display correspond to each other, and outputs the control signal.

(2) The information processing system according to (1) described above, in which
the control unit is configured to generate a control signal for driving the pixel in such a manner that the exposure time becomes an integral multiple of the light emission cycle.

(3) The information processing system according to (2) described above, in which
the control unit is configured to determine a refresh rate of the display in such a manner that a light emission cycle of a pixel of the display corresponds to the exposure time of the imaging unit for imaging the display, and generate a control signal for driving the pixel of the display on the basis of the refresh rate.

(4) The information processing system according to (3) described above, further including:
an acquisition unit that acquires the exposure time of the imaging unit.

(5) The information processing system according to (3) or (4) described above, further including:

an input unit that acquires a video signal to be displayed on the display including a plurality of display units;
a division unit that divides the video signal into a video signal to be displayed on each display unit of the display; and
an output unit that outputs a signal indicating the refresh rate and the divided video signal to the display unit.

(6) The information processing system according to (5) described above, in which

the control unit is provided on a first device, the input unit, the division unit, and the output unit are provided on a second device different from the first device, and the control unit is configured to output the control signal for driving the pixel of the display to the second device.

(7) The information processing system according to (5) described above, in which

the control unit, the input unit, the division unit, and the output unit are provided on the same device, and the control unit is configured to output the control signal for driving the pixel of the display to the display unit.

(8) The information processing system according to any one of (3) to (7) described above, further including:
the display configured to be driven on the basis of the refresh rate.

(9) The information processing system according to (2) described above, in which
the control unit is configured to set the exposure time of the imaging unit in such a manner that the light emission cycle of the display corresponds to the exposure time of the imaging unit for imaging the display, generate the control signal for driving the pixel of the imaging unit on the basis of the set exposure time, and output the control signal for driving the pixel of the imaging unit to the imaging unit.

(10) The information processing system according to (9) described above, further including:
an acquisition unit that acquires a refresh rate of the display.

(11) The information processing system according to (9) or (10) described above, in which
the control unit and the imaging unit are provided on the same device.

(12) The information processing system according to (9) or (10) described above, in which
the control unit and the imaging unit are provided on different devices.

(13) The information processing system according to any one of (1) to (12) described above, in which

an exposure start time of the imaging unit and a display start time of the display are configured to be synchronized with each other.

(14) The information processing system according to any one of (1) to (13) described above, in which the display is configured to emit light by a passive matrix drive system.

(15) The information processing system according to any one of (1) to (14) described above, in which the display includes pixels of light emitting diodes (LEDs) arranged in a matrix.

(16) The information processing system according to any one of (1) to (15) described above, in which the imaging unit is configured to perform imaging by a rolling shutter system.

(17) An information processing method including:

a generation step of generating a control signal for driving a pixel in such a manner that a light emission cycle of a display and an exposure time of an imaging unit for imaging the display correspond to each other; and

an output step of outputting the control signal by an information processing system.

(18) The information processing method according to (17) described above, in which

in processing at the generation step, a control signal for driving the pixel in such a manner that the exposure time becomes an integral multiple of the light emission cycle is generated.

(19) The information processing method according to (18), in which

in the processing at the generation step, a refresh rate of the display is determined in such a manner that a light emission cycle of a pixel of the display corresponds to the exposure time of the imaging unit for imaging the display, and a control signal for driving the pixel of the display is generated on the basis of the refresh rate.

(20) The information processing method according to (18), in which

in the processing at the generation step, the exposure time of the imaging unit is set in such a manner that the light emission cycle of the display corresponds to the exposure time of the imaging unit for imaging the display, and the control signal for driving the pixel of the imaging unit is generated on the basis of the set exposure time, and

in processing at the output step, the control signal for driving the pixel of the imaging unit is output to the imaging unit.

REFERENCE SIGNS LIST

| 10 | Reimaging system |
| 11 | Video camera |
| 12 | Video wall |
| 62 | PC |
| 63 | Video wall controller |
| 83 | Drive unit |
| 132 | Control unit |
| 133 | Transmission control unit |
| 152 | HDMI terminal |
| 153 | DP terminal |
| 154 | DVI terminal |
| 160 | Distribution unit |
| 161-1 to 161-n | Signal output IF |
| 241 | LED |
| 400 | Reimaging system |
| 401 | Video camera |
| 402 | PC |
| 422 | Acquisition unit |
| 423 | Setting unit |

**Claims**

1. An information processing system comprising:
   a control unit that generates a control signal for driving a pixel in such a manner that a light emission cycle of a display and an exposure time of an imaging unit for imaging the display correspond to each other, and outputs the control signal.

2. The information processing system according to claim 1, wherein
   the control unit is configured to generate a control signal for driving the pixel in such a manner that the exposure time becomes an integral multiple of the light emission cycle.

3. The information processing system according to claim 2, wherein
   the control unit is configured to determine a refresh rate of the display in such a manner that a light emission cycle of a pixel of the display corresponds to the exposure time of the imaging unit for imaging the display, and generate a control signal for driving the pixel of the display on a basis of the refresh rate.

4. The information processing system according to claim 3, further comprising:
   an acquisition unit that acquires the exposure time of the imaging unit.

5. The information processing system according to claim 3, further comprising:

   an input unit that acquires a video signal to be displayed on the display including a plurality of display units;
   a division unit that divides the video signal into a video signal to be displayed on each display unit of the display; and

an output unit that outputs a signal indicating the refresh rate and the divided video signal to the display unit.

6. The information processing system according to claim 5, wherein

the control unit is provided on a first device, the input unit, the division unit, and the output unit are provided on a second device different from the first device, and the control unit is configured to output the control signal for driving the pixel of the display to the second device.

7. The information processing system according to claim 5, wherein

the control unit, the input unit, the division unit, and the output unit are provided on the same device, and the control unit is configured to output the control signal for driving the pixel of the display to the display unit.

8. The information processing system according to claim 3, further comprising:
the display configured to be driven on a basis of the refresh rate.

9. The information processing system according to claim 2, wherein
the control unit is configured to set the exposure time of the imaging unit in such a manner that the light emission cycle of the display corresponds to the exposure time of the imaging unit for imaging the display, generate the control signal for driving the pixel of the imaging unit on a basis of the set exposure time, and output the control signal for driving the pixel of the imaging unit to the imaging unit.

10. The information processing system according to claim 9, further comprising:
an acquisition unit that acquires a refresh rate of the display.

11. The information processing system according to claim 9, wherein
the control unit and the imaging unit are provided on the same device.

12. The information processing system according to claim 9, wherein
the control unit and the imaging unit are provided on different devices.

13. The information processing system according to claim 1, wherein
an exposure start time of the imaging unit and a display start time of the display are configured to be synchronized with each other.

14. The information processing system according to claim 1, wherein
the display is configured to emit light by a passive matrix drive system.

15. The information processing system according to claim 1, wherein
the display includes pixels of light emitting diodes (LEDs) arranged in a matrix.

16. The information processing system according to claim 1, wherein
the imaging unit is configured to perform imaging by a rolling shutter system.

17. An information processing method comprising:

a generation step of generating a control signal for driving a pixel in such a manner that a light emission cycle of a display and an exposure time of an imaging unit for imaging the display correspond to each other; and an output step of outputting the control signal by an information processing system.

18. The information processing method according to claim 17, wherein
in processing at the generation step, a control signal for driving the pixel in such a manner that the exposure time becomes an integral multiple of the light emission cycle is generated.

19. The information processing method according to claim 18, wherein
in the processing at the generation step, a refresh rate of the display is determined in such a manner that a light emission cycle of a pixel of the display corresponds to the exposure time of the imaging unit for imaging the display, and a control signal for driving the pixel of the display is generated on a basis of the refresh rate.

20. The information processing method according to claim 18, wherein

in the processing at the generation step, the exposure time of the imaging unit is set in such a manner that the light emission cycle of the display corresponds to the exposure time of the imaging unit for imaging the display, and the control signal for driving the pixel of the imaging unit is generated on a basis of the set exposure time, and

in processing at the output step, the control signal for driving the pixel of the imaging unit is output to the imaging unit.

FIG. 1

FIG. 3

EP 4 411 705 A1

# FIG. 4

EP 4 411 705 A1

# FIG. 5

## FIG. 6

EP 4 411 705 A1

130

REFRESH RATE CONTROL UNIT

| ACQUISITION UNIT | CONTROL UNIT | TRANSMISSION CONTROL UNIT |
|---|---|---|
| 131 | 132 | 133 |

# FIG. 7

VIDEO WALL CONTROLLER — 63

LAN TERMINAL (151) → NETWORK IF (155) ↔ MPU (156)

HDMI TERMINAL (152), DP TERMINAL (153), DVI TERMINAL (154) → SIGNAL INPUT IF (157) → SIGNAL PROCESSING UNIT (158) → DISTRIBUTION UNIT (160) → SIGNAL OUTPUT IF (161-1, 161-2, 161-3, ... 161-n)

DRAM (159)

EP 4 411 705 A1

*FIG. 8*

FIG. 9

FIG. 10

EP 4 411 705 A1

*FIG. 11*

FIG. 12

ONE FRAME SECTION

LIGHT EMISSION CYCLE

EXPOSURE TIME

ELAPSED TIME

ONE FRAME SECTION

LIGHT EMISSION CYCLE

EXPOSURE TIME

261

# FIG. 13

FIG. 14

EP 4 411 705 A1

# FIG. 15

```
( IMAGING PROCESSING START )
            │
            ▼
┌─────────────────────────┐
│   GENERATE INPUT SIGNAL  │ S10
│  INDICATING IMAGING START│
└─────────────────────────┘
            │
            ▼
┌─────────────────────────┐
│   TRANSMIT EXPOSURE TIME │ S11
└─────────────────────────┘
            │
            ▼
┌─────────────────────────┐
│   GENERATE DRIVE SIGNAL  │ S12
└─────────────────────────┘
            │
            ▼
┌─────────────────────────┐
│      PERFORM IMAGING     │ S13
└─────────────────────────┘
            │
            ▼
┌─────────────────────────┐
│ PERFORM SIGNAL PROCESSING│ S14
└─────────────────────────┘
            │
            ▼
┌─────────────────────────┐
│       DISPLAY VIDEO      │ S15
└─────────────────────────┘
            │
            ▼
┌─────────────────────────┐
│     STORE VIDEO SIGNAL   │ S16
└─────────────────────────┘
            │
            ▼
       IS INPUT OF              S17
  IMAGING FINISH INSTRUCTION  ──── NO ──►  IS EXPOSURE TIME   S18
        RECEIVED?                            CHANGED?       ── NO ──►
            │ YES                              │ YES
            ▼                                  
          ( END )
```

33

# FIG. 16

```
┌─────────────────────────────────┐
│  REFRESH RATE CONTROL PROCESSING │
│             START                │
└─────────────────────────────────┘
                 │
                 ▼
┌─────────────────────────────────┐ S31
│       ACQUIRE EXPOSURE TIME      │
└─────────────────────────────────┘
                 │
                 ▼
┌─────────────────────────────────┐ S32
│       DETERMINE REFRESH RATE     │
│      ON BASIS OF EXPOSURE TIME   │
└─────────────────────────────────┘
                 │
                 ▼
┌─────────────────────────────────┐ S33
│    TRANSMIT REFRESH RATE COMMAND │
└─────────────────────────────────┘
                 │
                 ▼
            ┌─────────┐
            │   END   │
            └─────────┘
```

# FIG. 17

```
┌──────────────────────────────────────┐
│   VIDEO SIGNAL PROCESSING START      │
└──────────────────────────────────────┘
                 │
                 ▼
┌──────────────────────────────────────┐  S51
│        RECEIVE VIDEO SIGNAL          │
└──────────────────────────────────────┘
                 │
                 ▼
┌──────────────────────────────────────┐  S52
│       CONVERT INTO VIDEO FORMAT      │
└──────────────────────────────────────┘
                 │
                 ▼
              ╱──────╲               S53
         ╱──────────────────╲
        ╱  IS VIDEO ADJUSTMENT ╲
        ╲  COMMAND RECEIVED?    ╱  NO
         ╲──────────────────╱
              ╲──────╱
                 │ YES
                 ▼
┌──────────────────────────────────────┐  S54
│  GENERATE VIDEO ADJUSTMENT SIGNAL    │
│           ACCORDING TO               │
│     VIDEO ADJUSTMENT COMMAND         │
└──────────────────────────────────────┘
                 │
                 ▼
┌──────────────────────────────────────┐  S55
│      PERFORM SIGNAL PROCESSING       │
│           ON VIDEO SIGNAL            │
└──────────────────────────────────────┘
                 │
                 ▼
┌──────────────────────────────────────┐  S56
│       DISTRIBUTE VIDEO SIGNAL        │
│       TO EACH SIGNAL OUTPUT IF       │
└──────────────────────────────────────┘
                 │
                 ▼
┌──────────────────────────────────────┐  S57
│ TRANSMIT VIDEO SIGNAL TO DISPLAY UNIT│
└──────────────────────────────────────┘
                 │
                 ▼
┌──────────────────────────────────────┐
│                END                   │
└──────────────────────────────────────┘
```

# FIG. 18

```
DISPLAY CONTROL SIGNAL
GENERATION PROCESSING START
```

IS REFRESH RATE
COMMAND RECEIVED?                    S71

NO

YES

GENERATE DISPLAY CONTROL SIGNAL
ACCORDING TO
REFRESH RATE COMMAND          S72

GENERATE DISPLAY CONTROL SIGNAL
INDICATING PREDETERMINED
REFRESH RATE                         S73

SUPPLY DISPLAY CONTROL SIGNAL
TO EACH SIGNAL OUTPUT IF       S74

TRANSMIT DISPLAY CONTROL SIGNAL
TO DISPLAY UNIT                    S75

END

# FIG. 19

```
     ( DISPLAY PROCESSING START )
                   │
                   ▼
┌──────────────────────────────────┐  S91
│      RECEIVE VIDEO SIGNAL AND     │
│       DISPLAY CONTROL SIGNAL      │
└──────────────────────────────────┘
                   │
                   ▼
┌──────────────────────────────────┐  S92
│ PERFORM SIGNAL PROCESSING ON VIDEO SIGNAL │
└──────────────────────────────────┘
                   │
                   ▼
┌──────────────────────────────────┐  S93
│     DIVIDE VIDEO SIGNAL INTO m PIECES     │
└──────────────────────────────────┘
                   │
                   ▼
┌──────────────────────────────────┐  S94
│        GENERATE DISPLAY SIGNAL            │
└──────────────────────────────────┘
                   │
                   ▼
┌──────────────────────────────────┐  S95
│ SUPPLY DISPLAY SIGNAL AND DISPLAY CONTROL │
│      SIGNAL TO SIGNAL OUTPUT IF           │
└──────────────────────────────────┘
                   │
                   ▼
┌──────────────────────────────────┐  S96
│      TRANSMIT DISPLAY SIGNAL AND          │
│       DISPLAY CONTROL SIGNAL              │
└──────────────────────────────────┘
                   │
                   ▼
┌──────────────────────────────────┐  S97
│      RECEIVE DISPLAY SIGNAL AND           │
│       DISPLAY CONTROL SIGNAL              │
└──────────────────────────────────┘
                   │
                   ▼
┌──────────────────────────────────┐  S98
│ PERFORM PWM CONTROL ON LIGHT EMISSION OF  │
│  EACH LED ON BASIS OF DISPLAY SIGNAL AND  │
│        DISPLAY CONTROL SIGNAL             │
└──────────────────────────────────┘
                   │
                   ▼
              (   END   )
```

# FIG. 20

ROW #1

ROW #2

ROW #3

ROW #4

ELAPSED TIME

ONE FRAME SECTION

ROW #1

ROW #2

ROW #3

ROW #4

ELAPSED TIME

ONE FRAME SECTION

EP 4 411 705 A1

# FIG. 21

FIG. 22

EP 4 411 705 A1

## FIG. 23

EP 4 411 705 A1

## FIG. 24

ONE FRAME SECTION

EXPOSURE TIME

LIGHT EMISSION CYCLE

ELAPSED TIME

EP 4 411 705 A1

# FIG. 25

```
( IMAGING PROCESSING START )
            │
            ▼
┌──────────────────────────┐
│   GENERATE INPUT SIGNAL   │ S110
│  INDICATING IMAGING START │
└──────────────────────────┘
            │
            ▼
┌──────────────────────────┐
│    REQUIRE REFRESH RATE    │ S111
└──────────────────────────┘
            │
            ▼
┌──────────────────────────┐
│    ACQUIRE REFRESH RATE    │ S112
└──────────────────────────┘
            │
            ▼
┌──────────────────────────┐
│   SET EXPOSURE TIME ON     │ S113
│   BASIS OF REFRESH RATE    │
└──────────────────────────┘
            │
            ▼
┌──────────────────────────┐
│    GENERATE DRIVE SIGNAL   │ S114
└──────────────────────────┘
            │
            ▼
┌──────────────────────────┐
│      PERFORM IMAGING       │ S115
└──────────────────────────┘
            │
            ▼
┌──────────────────────────┐
│  PERFORM SIGNAL PROCESSING │ S116
└──────────────────────────┘
            │
            ▼
┌──────────────────────────┐
│       DISPLAY VIDEO        │ S117
└──────────────────────────┘
            │
            ▼
┌──────────────────────────┐
│     STORE VIDEO SIGNAL     │ S118
└──────────────────────────┘
            │
            ▼
      S119
  ◇ IS INPUT OF
  IMAGING FINISH INSTRUCTION ◇ ── NO ──► S120
      RECEIVED?                      ◇ IS NEW REFRESH RATE ◇ ── NO
            │ YES                      TRANSMITTED?
            ▼                             │ YES
         ( END )
```

# FIG. 26

REFRESH RATE TRANSMISSION
PROCESSING START

S131
IS REFRESH RATE
REQUIRED?

NO

YES

TRANSMIT REFRESH RATE | S132

S133
IS TRANSMISSION OF
REFRESH RATE REQUIRED
TO BE FINISHED?

NO

YES

S134
IS REFRESH RATE
CHANGED?

NO

YES

END

## INTERNATIONAL SEARCH REPORT

| International application No. |
| --- |
| **PCT/JP2022/010845** |

### A. CLASSIFICATION OF SUBJECT MATTER

*H04N 5/235*(2006.01)i; *G09G 3/20*(2006.01)i; *G09G 3/32*(2016.01)i; *G09G 5/00*(2006.01)i; *H04N 5/222*(2006.01)i
FI: H04N5/235 300; G09G3/20 680E; G09G3/20 691G; G09G3/32 A; G09G5/00 510V; G09G5/00 550B; G09G5/00 550C; H04N5/222 400; H04N5/235 700

According to International Patent Classification (IPC) or to both national classification and IPC

### B. FIELDS SEARCHED

Minimum documentation searched (classification system followed by classification symbols)

H04N5/235; G09G3/20; G09G3/32; G09G5/00; H04N5/222

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | CN 112565620 A (BOE TECHNOLOGY GROUP CO., LTD.) 26 March 2021 (2021-03-26) abstract, paragraphs [0002], [0003], [0005], [0015], [0034]-[0037], [0041]-[0046], fig. 1, 2, 4 | 1-2, 9-18, 20 |
| Y | | 3-8, 19 |
| Y | WO 2018/164105 A1 (SONY SEMICONDUCTOR SOLUTIONS CORP.) 13 September 2018 (2018-09-13) paragraphs [0001]-[0008], [0011]-[0045], [0054], fig. 1, 2, 15 | 3-8, 19 |
| Y | CN 111899680 A (QINGDAO HISENSE MEDICAL EQUIPMENT CO., LTD.) 06 November 2020 (2020-11-06) paragraphs [0002], [0003], [0059], [0090] | 3-8, 19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 May 2022** | **24 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/010845**

| Patent document cited in search report | | | Publication date (day/month/year) | Patent family member(s) | | | Publication date (day/month/year) |
|---|---|---|---|---|---|---|---|
| CN | 112565620 | A | 26 March 2021 | (Family: none) | | | |
| WO | 2018/164105 | A1 | 13 September 2018 | US paragraphs [0001]-[0008], [0040]-[0076], [0085], fig. 1, 2, 15 CN | 2021/0295766 110447062 | A1 A | |
| CN | 111899680 | A | 06 November 2020 | (Family: none) | | | |

Form PCT/ISA/210 (patent family annex) (January 2015)

**REFERENCES CITED IN THE DESCRIPTION**

**Patent documents cited in the description**

- WO 2018164105 A